# EUROPÄISCHE PATENTSCHRIFT

(11) **EP 1 968 830 B1**
(45) Veröffentlichungstag und Bekanntmachung des Hinweises auf die Patenterteilung: **17.03.2010**
(21) Anmeldenummer: 06806437.7
(22) Anmeldetag: 20.10.2006
(51) Int. Cl.: B60T 8/32, B60T 13/68, B60T 7/08, B60T 17/08

(54) **ELEKTROPNEUMATISCHE BREMSSTEUERUNGSEINRICHTUNG**
ELECTRO-PNEUMATIC BRAKE CONTROL DEVICE
DISPOSITIF ELECTROPNEUMATIQUE DE COMMANDE DE FREIN

(30) Priorität: 09.12.2005 DE 102005058799
(43) Veröffentlichungstag der Anmeldung: 17.09.2008
(73) Patentinhaber: WABCO GmbH, 30453 Hannover (DE)
(72) Erfinder: BENSCH, Uwe, 30161 Hannover (DE); FÖRSTER, Henning, 31171 Nordstemmen (DE); KIEL, Bernd-Joachim, 31515 Wunstorf (DE); MENZE, Wilfried, 31832 Springe (DE); ROSENDAHL, Hartmut, 30167 Hannover (DE); STRUWE, Otmar, 30163 Hannover (DE)
(74) Vertreter: Günther, Constantin
(86) Internationale Anmeldenummer: PCT/EP2006/010151
(87) Internationale Veröffentlichungsnummer: WO 2007/065498

(56) Entgegenhaltungen:
- EP-A- 1 571 061
- EP-A1- 1 382 502
- EP-A2- 0 394 065
- DE-C1- 19 953 805

## Beschreibung

Die Erfindung betrifft eine elektropneumatische Bremssteuerungseinrichtung zur Steuerung einer Feststellbremse eines Fahrzeugs gemäß den Oberbegriffen der Ansprüche 1, 5 und 7. Ferner betrifft die Erfindung eine elektrisch gesteuerte pneumatische Fahrzeugbremsanlage gemäß dem Oberbegriff des Patentanspruchs 12 mit einer Bremssteuerungseinrichtung. Schließlich betrifft die Erfindung ein Fahrzeug mit einer elektrisch gesteuerten pneumatischen Bremsanlage.

Eine Bremssteuerungseinrichtung sowie eine Bremsanlage sind z.B aus EP 1 571 061 A1 bekannt.

Diese bekannte Bremsanlage weist neben einer Betriebsbremse, die mittels eines Bremspedals betätigbar ist, eine Feststellbremse (oftmals auch als Parkbremse oder Handbremse bezeichnet) auf, welche mittels eines elektrischen Signalgebers betätigbar ist.

Bei derartigen elektrisch gesteuerten Bremsanlagen ist ein Ausfall der elektrischen Energieversorgung ein problematisches Ereignis. Elektrische Komponenten, wie elektrische Steuerungssysteme und elektrisch betätigbare Magnetventile, können nicht mehr betätigt werden. Ferner fallen somit auch elektrische Signalgeber für die Feststellbremse aus. Es wurde daher in DE 199 53 805 C1 bzw. EP 1 571 061 A1 vorgeschlagen, durch Entlüften eines Federspeichers, welcher auf die Feststellbremse wirkt, automatisch eine Notbremsung einzuleiten, wenn die elektrische Energieversorgung ausfällt. Eine automatische Notbremsung ist jedoch nachteilig, da das Fahrzeug dann u.U. an einem ungeeigneten Ort zum Stillstand kommt und ohne fremde Hilfe nicht wieder entfernt werden kann. Darüber hinaus erfolgen derartige Notbremsungen in der Regel auch mit maximaler Bremswirkung, was ebenfalls zu einer Gefährdung des nachfolgenden Straßenverkehrs führen kann.

EP 1 571 061 A1 hat daher eine Bremsanlage vorgeschlagen, mit der sich das Fahrzeug bei Ausfall der elektrischen Energieversorgung mittels einer pneumatischen Steuerung des Federspeicherteils des Federspeicher-Bremszylinders durch Betätigen des Bremspedals abstufbar abbremsen lässt.

Diese Lösung hat jedoch den Nachteil, dass die Federspeicherbremszylinder wieder mit Druck beaufschlagt werden, wenn das Bremspedal nicht mehr betätigt wird, so dass sich die Feststellbremse wieder löst. Daher kann mit diesem bekannten System das Fahrzeug nicht sicher abgestellt werden.

EP 0 394 065 A2 offenbart ein elektronisches Bremssystem mit einem Reservebremssystem, in dem ein Kontrollventil zur Kontrolle eines Bremsdruckes betätigt wird, wenn das Bremspedal niedergedrückt wird. Der Ausgang des Ventils ist mit einem Wahlventil verbunden, welches das Kontrollventil von den Bremsen isoliert, falls das elektronische Bremssystem korrekt funktioniert. Im anderen Fall ist über das Kontrollventil eine Kontrolle des Bremsdruckes der Bremsen möglich. Des Weiteren wird eine spezielle Ausführung des Kontrollventils offenbart, die eine Kontrolle der Federspeicherbremse in einem Reservemodus ermöglicht.

Der Erfindung liegt daher die Aufgabe zugrunde, ein Fahrzeug auch bei Totalausfall der elektrischen Energieversorgung sicher abstellen zu können.

Diese Aufgabe wird durch die in den Patentansprüchen 1, 5, 7, 12 und 13 angegebene Erfindung gelöst.

Die Erfindung hat den Vorteil, dass der Fahrer durch eine Betätigung des Betriebsbremspedals eine dauerhafte Entlüftung des Federspeicherteils des Federspeicherbremszylinders herbeiführen kann, wodurch die Feststellbremse eingelegt wird. Da die Entlüftung dauerhaft während des Ausfalls der elektrischen Energieversorgung erfolgt, kann der Federspeicherteil des Federspeicherbremszylinders auch nicht versehentlich wieder belüftet werden, was zu einem Lösen der Feststellbremse führen würde. Der Fahrer kann daher das Fahrzeug durch Betätigen des Bremspedals gezielt abbremsen und sicher abstellen. Die Feststellbremse wird mittels des Federspeichers endgültig eingelegt, so dass die Feststellbremse und damit auch das Fahrzeug in einen Parkzustand gebracht wird und der Fahrer das Fahrzeug verlassen kann. Dank dieser Lösung hat der Fahrer bspw. noch die Möglichkeit einen Parkplatz oder einen Fahrbahnrand anzufahren, um dann durch Betätigen des Bremspedals die Feststellbremse in einem Parkzustand zu versetzen.

Die Steuerungseinrichtung für die Feststellbremse weist auf: eine Druckluftzufuhrleitung, die mit einem Druckluftvorratsbehälter zum Betätigen des Federspeicherteils des Federspeicherbremszylinders verbindbar ist; eine luftmengenverstärkende Ventileinrichtung, bspw. ein Relaisventil, deren Einlass mit der Druckluftzufuhrleitung und deren Auslass mit einer Druckluftleitung zum Federspeicherteil des Federspeicherbremszylinders verbindbar ist und die einen pneumatischen Steuereingang zur Zufuhr eines Steuerdrucks zum Steuern des Druckes am Auslass der luftmengenverstärkenden Ventileinrichtung aufweist; ein elektrisch betätigbares Bistabilventil mit einem Einlass, der mit der Druckluftzufuhrleitung und dessen Auslass mit dem Steuereingang des Relaisventils verbindbar ist, wobei in einer Parkstellung der Auslass des Bistabilventils mit einer Entlüftung und in einer Fahrstellung sein Auslass mit seinem Einlass verbunden ist; und eine elektrische Steuereinheit, mit der das Bistabilventil elektrisch verbunden ist und die das Bistabilventil steuert.

Mittels der luftmengenverstärkenden Ventileinrichtung kann der Druck auf den Federspeicherteil des Federspeicherbremszylinders gesteuert werden, um die Feststellbremse zu lösen bzw. auch gesteuert einzulegen. Die Steuerung der luftmengenverstärkenden Ventileinrichtung erfolgt über einen Steuerdruck, welcher in einem einfachen Fall mittels des elektrisch betätigbaren Bistabilventils an den Steuereingang der luftmengenverstärkenden Ventileinrichtung geführt wird.
Der zugeführte Steuerdruck stammt aus einem Vorratsbehälter der Druckluftversorgung für die Feststellbremse. Das Bistabilventil weist eine Fahrstellung auf, bei welcher der Druck des Vorratsbehälters an den Steuereingang der luftmengenverstärkenden Ventileinrichtung gelegt wird. In einer Parkstellung wird hingegen der Steuereingang mit einem Entlüftungsauslass am Bistabilventil verbunden, so dass der Steuerdruck abfällt und somit auch der Druck am Auslass der luftmengenverstärkenden Ventileinrichtung und damit auch im Federspeicherteil des Federspeicherbremszylinders. Hierdurch wird die Feststellbremse eingelegt. Das Bistabilventil ist elektrisch betätigbar, so dass mittels eines elektrischen Signalgebers über die elektrische Steuereinheit das Bistabilventil in die jeweilige Stellung (Parkstellung oder Fahrstellung) gebracht werden kann. Dank der Ausbildung dieses Ventils als Bistabilventil ändert sich der Zustand bzw. die Stellung dieses Ventils auch bei einem Stromausfall nicht. Dies ist insofern vorteilhaft, als dass dadurch verhindert wird, dass bei einem Stromausfall die Feststellbremse durch Entlüftung des Federspeicherteils der Federspeicherbremszylinder automatisch eingelegt, d.h. eine automatische Notbremsung eingeleitet würde.

Ferner ist vorteilhafterweise an der Bremssteuereinrichtung ein mit der elektrischen Steuereinheit verbundenes elektrisch betätigbares Haltenventil vorgesehen, das zwischen den Steuereingang der luftmengenverstärkenden Ventileinrichtung und den Auslass des Bistabilventils geschaltet ist und bei dem in einem unbestromten Zustand des Haltenventils sein Einlass mit seinem Auslass verbunden und in einem bestromten Zustand sein Einlass von seinem Auslass abgesperrt ist. Mittels dieses Haltenventils kann der Druck am Steuereingang der luftmengenverstärkenden Ventileinrichtung dosiert werden. Hierdurch ist eine kontrollierte Bremsung des Fahrzeuges auch mit der Feststellbremse möglich. Dank des Haltenventils kann nämlich prinzipiell jede beliebige Bremskraft mit der Feststellbremse ausgeübt werden.

Bei einer Ausführungsform ist ein Rückschlagventil vorgesehen, das in der Druckluftzufuhrleitung zwischen dem Einlass der luftmengenverstärkenden Ventileinrichtung und einer Abzweigung in der Druckluftzufuhrleitung zum Bistabilventil angeordnet ist, wobei das Rückschlagventil in Richtung von dieser Abzweigung zur luftmengenverstärkenden Ventileinrichtung offen bzw. druckdurchlässig ist, jedoch in den entgegengesetzter Richtung sperrt, und diese Abzweigung direkt mit dem Druckluftvorratsbehälter, insbesondere ohne Zwischenschaltung eines weiteren Rückschlagventils verbindbar ist.

Herkömmlicherweise wird ein Rückschlagventil vor die Steuerungseinrichtung der Feststellbremse eingebaut, damit Druckschwankungen, wie sie bspw. bei Bremsungen mit einem Einsatz des Antiblockiersystem auftreten können, nicht zum Anlegen der Feststellbremse führen. Der Druckluftvorratsbehälter des Feststellbremskreises ist zwar grundsätzlich separat von den Druckluftvorratsbehältern der Bremskreise der Vorderachse und der Hinterachse des Fahrzeuges ausgebildet. Jedoch kommunizieren diese Vorratsbehälter miteinander, so dass ein Druckabfall in einem der Vorratsbehälter auch zu einem Druckabfall in einem anderen, insbesondere dem Druckluftvorratsbehälter des Feststellbremskreissystems führt. Diese Wechselwirkung zwischen den Vorratsbehältern führt dazu, dass bspw. im Falle von Bremsungen mit einem Einsatz des Antiblockiersystems ein erheblicher Druckabfall in den Vorratsbehältern der Vorderachse und der Hinterachse eintritt, was in der Folge auch zu einem Druckabfall im Feststellbremskreisvorratsbehälter führt. Dank des üblicherweise eingebauten Rückschlagventils vor der Steuerungseinrichtung der Feststellbremse kann somit ein Anlegen der Feststellbremsen verhindert werden. Dieses Rückschlagventil in seiner herkömmlichen Anordnung hat jedoch den Nachteil, dass ein gezieltes Absenken des Druckes im Feststellbremskreis durch mehrfaches Betätigen des Betriebsbremspedals verhindert wird. Bei Anordnung eines Rückschlagventils vor der Steuerungseinrichtung der Feststellbremse wird nämlich bei einem Stromausfall ein Absenken des Druckes am Steuereingang der luftmengenverstärkenden Ventileinrichtung verhindert, so dass auch die Feststellbremse nicht angelegt werden kann. Bei einer Ausbildung der vorstehend beschriebenen Bremskreise, insbesondere aufgrund des bistabilen Ventils, führt dies dazu, dass bei einem Ausfall der elektrischen Energieversorgung nach einem mehrmaligen Betätigen der Betriebsbremse einerseits der Betriebsbremsdruck vollständig verbraucht ist, andererseits der Federspeicherteil des Federspeicherbremszylinders nicht mehr entlüftet und damit nicht mehr betätigt werden kann. Somit ist das Fahrzeug überhaupt nicht mehr bremsbar.

Aufgrund der bevorzugten Verlagerung des Rückschlagventils zwischen den Einlass der luftmengenverstärkenden Ventileinrichtung und die Abzweigung in der Druckluftzufuhrleitung zum Bistabilventil ist aber ein Bremsen des Fahrzeuges dennoch möglich. Durch den Einbau des Rückschlagventils direkt vor den Einlass der luftmengenverstärkenden Ventileinrichtung wird der Steuerdruck der luftmengenverstärkenden Ventileinrichtung vor dem Rückschlagventil abgegriffen. Der Steuerdruck der luftmengenverstärkenden Ventileinrichtung kann somit zusammen mit dem Druck im Vorratsbehälter des Feststellbremskreises abgesenkt werden, der infolge einer mehrfachen Betätigung des Bremspedals mit dem Druck bzw. den Drücken in den Vorratsbehältern der Bremskreise der Vorderachse und der Hinterachse absinkt.

Bei einem Stromausfall ist nunmehr der Steuereingang der luftmengenverstärkenden Ventileinrichtung direkt mit dem Vorratsbehälter des Feststellbremskreises verbunden. Dadurch wird bei mehrfachem Betätigen der Betriebsbremse schließlich der Druck im Steuerraum der luftmengenverstärkenden Ventileinrichtung abgesenkt, so dass der Federspeicherteil der Federspeicherbremszylinder entlüftet wird und die Federspeicher der Feststellbremse das Fahrzeug halten können. Das Fahrzeug kann somit auch bei einem vollständigen Ausfall der elektrischen Energieversorgung mittels Betätigung des Bremspedals sicher abgestellt werden.

Diese Ausführungsform hat den besonderen Vorteil, dass bei einem Ausfall der Spannungsversorgung bei mehrfacher Betätigung des Bremspedals und dem damit verbundenen Druckabfall in den Betriebsbremskreisen und dem Feststellbremskreis die Federspeicher der Feststellbremse langsam eingelegt werden können. Hierdurch kann eine abrupte Bremsung verhindert werden.

Bei einer weiteren bevorzugten Ausführungsform ist ein mit der elektrischen Steuereinheit verbundener Drucksensor vorgesehen, der in der Druckluftzufuhrleitung - in Richtung vom Druckmittelvorratsbehälter der Feststellbremse zur luftmengenverstärkenden Ventileinrichtung betrachtet - vor dem Rückschlagventil angeordnet ist. Dieser Drucksensor verhindert ein Anlegen der Feststellbremsen im Normalbetrieb, indem eventuelle auftretende Druckschwankungen, bspw. infolge von Bremsungen mit einem Einsatz des Antiblockiersystems von dem Drucksensor erfasst werden. Falls der vom Drucksensor gemessene Druck, der prinzipiell an den Steuereingang der luftmengenverstärkenden Ventileinrichtung geführt wird, unter einen kritischen Wert abfällt, wird das Haltenventil bestromt, so dass die Druckleitung, in der sich das Haltenventil befindet, unterbrochen und somit der Steuerdruck in der luftmengenverstärkenden Ventileinrichtung eingesperrt wird. Dieses Einsperren des Steuerdrucks in der luftmengenverstärkenden Ventileinrichtung verhindert, dass der Federspeicherteil der Federspeicherbremszylinder entlüftet wird. Somit kann durch Betätigung des Haltenventils bei Druckabfällen unterhalb eines kritischen Wertes ein Anlegen der Feststellbremsen zuverlässig verhindert werden.

Bei einer weiteren Ausführungsform weist die Bremssteuerungseinrichtung eine Ventileinrichtung auf, die zwischen den Einlass des Bistabilventils und die Druckluftzufuhrleitung geschaltet ist und einen Eingang für einen Vorratsdruck der Betriebsbremse sowie einen mit der Druckluftzufuhrleitung verbundenen Einlass, einen mit dem Einlass des Bistabilventils verbundenen Auslass und einen Entlüftungsauslass aufweist. Diese Ventileinrichtung kann wenigstens zwei Zustände einnehmen, nämlich einen ersten Zustand, der sich bei einem Vorratsdruck der Betriebsbremse größer als ein vorbestimmter Schwellenwert einstellt und bei dem der Einlass der Ventileinrichtung mit ihrem Auslass verbunden ist, und einen zweiten Zustand, der sich bei einem Vorratsdruck der Betriebsbremse kleiner als ein vorbestimmten Schwellenwert einstellt und bei dem der Auslass dieser Ventileinrichtung mit dem Entlüftungsauslass verbunden ist. Diese Ausführungsform hat den Vorteil, dass durch mehrfache Betätigung des Bremspedals der Betriebsbremse und dem damit einhergehenden Druckabfall in den Vorratsbehältern der Betriebsbremse und dem Vorratsbehälter der Feststellbremse der Federspeicherteil des Federspeicherbremszylinders ab einem bestimmten Schwellendruck schlagartig entlüftet und somit die Feststellbremse eingelegt wird.

Bei einer bevorzugten Weiterbildung weist die Ventileinrichtung ferner einen Eingang für den Druck in der Druckluftzufuhrleitung auf, wobei der Schwellenwert bestimmt wird durch den Druck in der Druckluftzufuhrleitung zzgl. eines von einem Federelement ausgeübten Druckes. Die Ventileinrichtung weist somit zwei Eingänge auf, an denen einerseits der Vorratsdruck der Betriebsbremse und andererseits der Vorratsdruck der Feststellbremse anliegt, so dass beide Drücke miteinander verglichen werden können. Wenn der Betriebsbremsdruck einen bestimmten Wert unterschreitet, der zusätzlich, jedoch nicht ausschließlich, vom Vorratsdruck des Feststellbremskreises bestimmt wird, wird über das sich in der Fahrstellung befindende und somit durchgeschaltete Bistabilventil und das ebenfalls durchgeschaltete Haltenventil der Steuereingang der luftmengenverstärkenden Ventileinrichtung entlüftet, so dass auch der Federspeicherteil der Federspeicherbremszylinder entlüftet wird. Dies führt zu einem Anlegen der Feststellbremse.

Bei einer weiteren Ausführungsform weist die Bremssteuerungseinrichtung eine vor den Steuereingang der luftmengenverstärkenden Ventileinrichtung geschaltete Ventilanordnung auf, mittels derer der am Steuereingang anliegende Druck entlüftet werden kann. Diese Ventilanordnung ist mit dem Druck eines als Redundanz vorgesehenen pneumatischen Bremskreises, dem Redundanzdruck, eingangsseitig beaufschlagbar. Die Ventilanordnung ist im Normalbetrieb inaktiv, so dass die Druckluftleitung vom Bistabilventil bzw. Haltenventil zur luftmengenverstärkenden Ventileinrichtung offen ist. Im Falle eines Ausfalls der elektrischen Energieversorgung ist die Ventilanordnung jedoch aktiv, wobei dann der Redundanzdruck derart auf die Ventilanordnung einwirkt, dass der Steuereingang der luftmengenverstärkenden Ventileinrichtung dauerhaft entlüftet wird. Diese Ausführungsform nutzt den Redundanzdruck aus, um den Steuereingang der luftmengenverstärkenden Ventileinrichtung und damit die Federspeicherbremsen dauerhaft zu entlüftet.

Vorteilhafterweise entlüftet die Ventilanordnung den Steuereingang der luftmengenverstärkenden Ventileinrichtung, wenn der Redundanzdruck über eine vorbestimmte Zeitdauer einen vorbestimmten Schwellendruck überschritten hat. Hierdurch erreicht man, dass die Federspeicherbremsen nicht versehentlich eingelegt werden, sondern nur dann, wenn der Fahrer tatsächlich über einen längeren Zeitraum das Bremspedal mit einem Mindestdruck beaufschlagt hat. Die Bremssteuerungseinrichtung der Feststellbremse entlüftet somit bei einem Stromausfall infolge eines Durchschaltens des Redundanzdrucks auf eine pneumatische Logik den Steuereingang der luftmengenverstärkenden Ventileinrichtung und damit den Steuerraum der luftmengenverstärkenden Ventileinrichtung und in der Folge den bzw. die Federspeicher Teile der Federspeicherbremszylinder, wenn der Redundanzdruck über einen definierten Zeitraum einen definierten Druckwert überschreitet.

Weitere vorteilhafte Ausführungsformen ergeben sich aus den Unteransprüchen und aus den anhand der beigefügten Zeichnungen näher erläuterten Ausführungsbeispielen. In der Zeichnung zeigt:
- Fig. 1: eine Druckluftbremsanlage in schematischer Darstellung mit einer elektropneumatischen Bremssteuerungseinrichtung zur Steuerung einer Feststellbremse;
- Fig. 2: eine elektropneumatische Bremssteuerungseinrichtung zur Steuerung der Feststellbremse gemäß einem ersten Ausführungsbeispiel der Erfindung;
- Fig. 3: eine elektropneumatische Bremssteuerungseinrichtung zur Steuerung der Feststellbremse gemäß einem zweiten Ausführungsbeispiel der Erfindung und
- Fig. 4: eine elektropneumatische Bremssteuerungseinrichtung zur Steuerung der Feststellbremse gemäß einem dritten Ausführungsbeispiel der Erfindung.

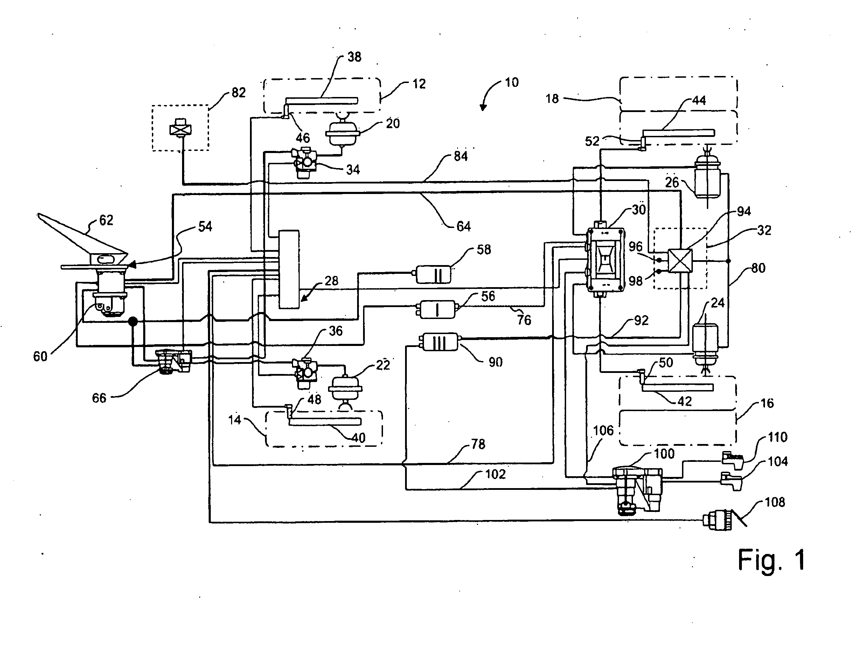

Anhand von Fig. 1 wird nachfolgend zunächst allgemein eine Druckluftbremsanlage erläutert, um darauf aufbauend die erfindungsgemäße elektropneumatische Einrichtung zur Steuerung einer Feststellbremse darzustellen, welche in eine derartige Druckluftbremsanlage integriert ist.

Fig. 1 zeigt schematisch eine Druckluftbremsanlage 10 für ein Fahrzeug mit vier Rädern 12, 14, 16, 18. Die Bremsanlage 10 wird elektrisch gesteuert, d.h. die Bremsdruckzumessung zu Bremszylindern 20, 22, 24, 26 der Räder 12, 14, 16, 18 wird durch elektrische und elektronische Steuerelemente gesteuert. Die Bremszylinder 20, 22 der Vorderräder 12, 14 werden von einem Vorderachsbremsteuermodul 28 und die Bremszylinder 24, 26 der Hinterräder 16, 18 von einem Hinterachsbremssteuermodul 30 gesteuert. Die Bremszylinder 24, 26 der Hinterräder 16, 18 sind als kombinierte Betriebs- und Federspeicherbremszylinder ausgebildet, wobei der Federspeicherteil von einer elektropneumatischen Bremssteuerungseinrichtung zur Steuerung der Feststellbremse, nämlich einem Feststellbremsmodul 32 gesteuert wird.

Den Bremszylindern 20, 22, 24, 26 sind jeweils elektromagnetisch betätigbare Ventile zur Beeinflussung des Bremsdrucks vorgeschaltet. Für die Vorderräder 12, 14 werden hierfür die Ventile 34, 36 verwendet. Für die Hinterräder 16, 18 sind die jeweiligen Ventile in dem Hinterachsbremssteuermodul 30 integriert.

An den Rädern 12, 14, 16, 18 sind jeweils Geschwindigkeitssensiermittel angeordnet, welche zur Ermittlung der jeweiligen Raddrehgeschwindigkeit dienen. Die Geschwindigkeitssensiermittel weisen jeweils ein mit dem Rad 12, 14, 16, 18 drehfest verbundenes Polrad 38, 40, 42, 44 auf, das mit einem induktiv arbeitenden Rad-Sensor 46, 48, 50, 52 elektromagnetisch gekoppelt ist.

Die Bremsanlage 10 weist ferner einen Bremswertgeber 54 auf, der einen Bremswunsch des Fahrers erfasst. Der Bremswertgeber 54 umfasst einen elektrischen und einen pneumatischen Teil. Der pneumatische Teil wird von einem ersten Druckluftvorratsbehälter 56 und einem zweiten Druckluftvorratsbehälter 58 mit Druckluft versorgt. Diese Druckluftvorratsbehälter 56, 58 dienen der Druckluftversorgung der Bremszylinder 20, 22 der Vorderräder 12, 14 bzw. der Bremszylinder 24, 26 der Hinterräder 16, 18. Der pneumatische Teil des Bremswertgebers 54 weist ein zweikreisig ausgeführtes Bremsventil 60 auf, das mechanisch mit einem Bremspedal 62 verbunden und mittels des Bremspedals 62 betätigbar ist. Bei Betätigung des Bremspedals 62 wird von dem Bremsventil 60 ein Drucksignal über eine Druckluftleitung 64 dem Feststellbremsmodul zugeführt. Ein weiteres, von diesem ersten Drucksignal entkoppeltes zweites Drucksignal wird einer Vorderachsventileinrichtung 66 zugeführt.

Diese Vorderachsventileinrichtung 66 weist ein Vorderachsredundanzventil (nicht separat dargestellt) und eine Druckregelventileinrichtung (nicht separat dargestellt) auf, z.B. ein Proportional-Relaisventil, welches ein elektrisches Signal vom Vorderachsbremssteuermodul 28 in einen pneumatischen Bremsdruck umsetzt.

Die Vorderachsventileinrichtung 66 ist über eine Druckluftleitung mit dem zweiten Druckluftvorratsbehälter 58 verbunden. Sie ist ferner über eine elektrische Leitung mit dem Vorderachsbremssteuermodul 28 verbunden. Im Normalbetrieb wird mittels eines über die elektrische Leitung zugeführten elektrischen Signals ein Druck für die Bremszylinder 20, 22 ausgeregelt. In einem sog. Redundanzfall, bspw. einem Ausfall der elektrischen Energieversorgung für die elektrische Steuerung oder einem Ausfall der gesamten elektrischen Steuerung der Bremsanlage oder Ausfall einzelner Steuerungsmodule der Bremsanlage erfolgt eine Umschaltung auf das Drucksignal des Bremswertgebers 54. Mittels der Vorderachsventileinrichtung 66 kann Druckluft zu den Ventilen 34, 36 geleitet werden.

Das Hinterachsbremssteuermodul 30 ist über eine pneumatische Leitung 76 mit dem ersten Druckluftvorratsbehälter 56 verbunden. Das Hinterachsbremssteuermodul 30 weist ebenfalls eine Datenschnittstelle auf, die über eine elektrische Leitung 78 mit einer weiteren Datenschnittstelle des Vorderachsbremssteuermoduls 28 verbunden ist. Über diese Datenschnittstellen tauschen die Module 28, 30 Daten aus. Bspw. empfängt das Hinterachsbremssteuermodul 30 von dem Vorderachsbremssteuermodul 28 den mittels des Bremswertgebers 54 erfassten Bremswunsch des Fahrers und steuert analog wie das Vorderachsbremssteuermodul 28 den Bremsdruck in den Bremszylindern 24, 26 der Hinterräder 16, 18 über in dem Hinterachsbremssteuermodul 30 angeordnete Ventile. Die hierfür erforderliche Druckluft entnimmt das Hinterachsbremssteuermodul 30 dem ersten Druckluftvorratsbehälter 56.

Die Bremszylinder 24, 26 sind als kombinierte Bremszylinder, nämlich als kombinierte Federspeicher-/Membranzylinder ausgebildet. Die Bremszylinder 24, 26 weisen neben der Funktion von Membranzylindern, die etwa der Funktion der Bremszylinder 20, 22 entspricht, zusätzlich eine Federspeicherfunktion auf. Die Bremszylinder 24, 26 bestehen aus einem Membranteil, welcher pneumatisch mit der Betriebsbremsanlage der Hinterachse verbunden und mit dem eigentlichen Bremsdruck beaufschlagbar ist, sowie aus einem Federspeicherteil, welcher pneumatisch von dem Membranteil getrennt und über gesonderte Druckluftleitungen mit Druckluft beaufschlagbar ist. Der Federspeicherteil bildet einen Teil der Feststellbremse (häufig auch als Parkbremse bzw. Handbremse bezeichnet). Der Federspeicherteil beinhaltet die Federspeicherfunktion, welche bei Druckluftbeaufschlagung des Federspeicherteils einen Federspeicher vorspannt und dabei eine Bremswirkung der Federspeicherfunktion verhindert bzw. verringert, während sich bei Entlüftung des Federspeicherteils die Speicherfeder entspannt und dabei eine Bremswirkung im Rahmen der Federspeicherfunktion auf die mit dem jeweiligen Bremszylinder verbundene Bremse ausübt. Bremszylinder dieses Typs werden im vorliegenden Zusammenhang als Federspeicherbremszylinder bezeichnet.

Mittels dieser Federspeicherbremszylinder wird eine Feststellbremsfunktion realisiert, die auch bei Fehlen von Druckluft eine Bremsung bzw. ein Festellen des Fahrzeuges ermöglicht. Die Feststellbremsfunktion tritt auf, wenn der jeweilige Federspeicherteil der Federspeicherbremszylinder 24, 26 unterhalb eines Mindestdruckwertes entlüftet wird. Der Federspeicherteil der Bremszylinder 24, 26 ist über Druckluftleitungen 80 mit dem Feststellbremsmodul 32 pneumatisch verbunden, welches eine Drucksteuerung mit Hilfe elektronischer Steuerungsmittel erlaubt.

Ein manuell betätigbarer Feststellbremssignalgeber 82 ist über eine mehradrige elektrische Leitung 84 mit dem Feststellbremsmodul 32 verbunden. Die elektrischen Einrichtungen in dem Fahrzeug werden von einer nicht dargestellten elektrischen Energieversorgungseinrichtung, z.B. einer Fahrzeugbatterie, über entsprechende elektrische Leitungen mit elektrischer Energie versorgt.

Ein dritter Druckluftvorratsbehälter 90 ist über eine Druckluftleitung 92 mit dem Feststellbremsmodul 32 verbunden. Dieser Druckluftvorratsbehälter 90 dient der Druckluftversorgung des Feststellbremskreises und des Anhängers.

Das Feststellbremsmodul 32 verfügt ferner über einen Eingangsanschluss 94 für das über die Druckluftleitung 64 zugeführte Drucksignal. Das Feststellbremsmodul 32 weist ferner Anschlüsse 96, 98 für die elektrische Energieversorgung und eine Datenschnittstelle auf. Der Anschluss 96 für die Datenschnittstelle dient zur Verbindung mit einem in dem Fahrzeug vorgesehenen Datenbussystem, welches auch als Fahrzeugbus bezeichnet wird. Der Fahrzeugbus dient zum Datenaustausch zwischen verschiedenen in dem Fahrzeug vorgesehenen, eine elektronische Steuerung enthaltende Geräten, wie z.B. den Modulen 28, 30, die hierfür ebenfalls über jeweilige Datenschnittstellenanschlüsse mit dem Fahrzeugbus verbunden sind.

Das beschriebene Fahrzeug ist zur Ankopplung eines Anhängers geeignet. In diesem Zusammenhang wird das bisher beschriebene Fahrzeug auch als Zugfahrzeug und die Einheit aus Zugfahrzeug und Anhänger auch als Fahrzeugzug bezeichnet.

Die Bremsanlage 10 weist ferner ein Anhängersteuerventil 100 auf, welches zur Bremsdrucksteuerung eines ankoppelbaren Anhängers dient. Das Anhängersteuerventil 100 ist zur Druckluftversorgung über eine Druckluftleitung 102 mit dem dritten Druckluftvorratsbehälter 90 verbunden. Das Anhängersteuerventil 100 gibt die von dem Druckluftvorratsbehälter 90 bezogene Druckluft in Abhängigkeit von elektrischen und pneumatischen Steuersignalen gestuft über einen Druckluftanschluss 104 an die Bremsanlage eines angekoppelten Anhängers ab. Zur Steuerung dieser Druckabgabe weist das Anhängersteuerventil 100 einen elektrischen Signaleingang auf, der mit dem Hinterachsbremssteuermodul 30 verbunden ist und über den das Anhängersteuerventil 100 ein elektrisches Signal empfängt, das den Bremswunsch des Fahrers widerspiegelt. Alternativ kann der elektrische Signaleingang auch an das Vorderachsbremssteuermodul 28 angeschlossen sein. Ferner ist ein Drucksteuereingang zum Empfang von pneumatischen Steuersignalen vorgesehen. Der Drucksteuereingang ist über eine Druckluftleitung 106 mit dem Feststellbremsmodul 32 verbunden.

Ein elektrischer Steckanschluss 108 dient der Stromversorgung und Übermittlung von Datensignalen an den Anhänger. Ferner ist ein Druckluftversorgungsanschluss 110 zur Versorgung des Anhängers mit Vorratsdruck vorgesehen.

Die Bremsanlage 10 weist ferner eine (nicht dargestellte) Druckluftversorgungsanlage, bspw. einen von dem Fahrzeugmotor angetriebenen Kompressor, auf, mittels der die Druckluftvorratsbehälter 56, 58, 90 mit Druckluft befüllbar sind.

Die bisher beschriebene Bremsanlage entspricht in weiten Teilen der aus EP 1 571 061 A1 beschriebenen Bremsanlage. Die Funktionsweise dieser Bremsanlage ist jedoch vorteilhaft zum Verständnis der nachfolgend näher erläuterten, in diese Bremsanlage integrierten Feststellbremssteuermodule gemäß besonderen Ausführungsbeispielen der Erfindung.

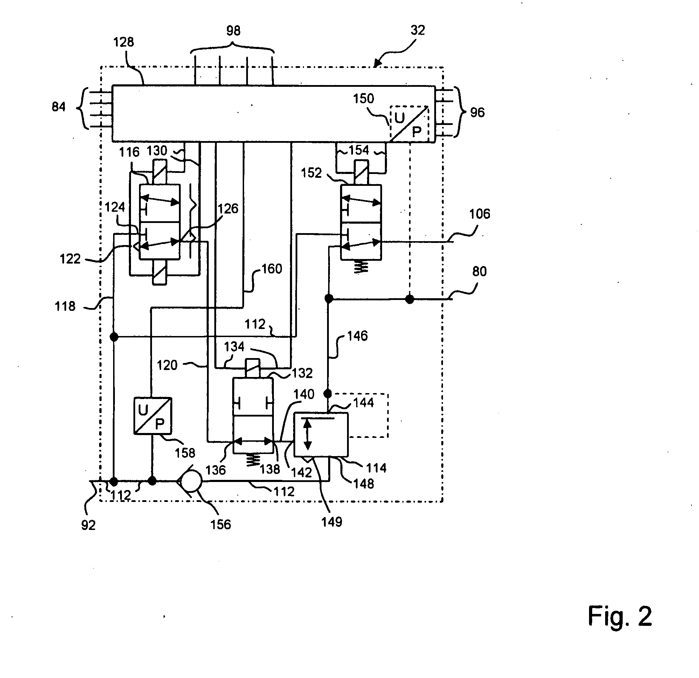

Fig. 2 zeigt den Aufbau eines Feststellbremssteuermoduls 32 gemäß einem ersten Ausführungsbeispiel der Erfindung in schematischer Form. Die Druckluftleitung 92 ist mit einer Druckluftzufuhrleitung 112 verbunden, mittels der einer als Relaisventil 114 ausgebildeten luftmengenverstärkenden Ventileinrichtung Druckluft zugeführt wird. Somit wird das Feststellbremssteuermodul 32 mit Druckluft aus dem dritten Druckluftvorratsbehälter 90 versorgt. Ein Bistabilventil 116 ist über eine Druckluftleitung 118 mit der Druckluftzufuhrleitung 112 verbunden. Das Bistabilventil 116 ist als elektromagnetisch betätigbares Ventil, insbesondere als 3/2-Wegeventil ausgebildet. Es weist eine erste Schaltstellung, auch Parkstellung oder Entlüftungsstellung genannt, auf, wie in Fig. 2 dargestellt. In dieser Stellung ist ein ausgangsseitiger mit einer Druckluftleitung 120 verbundener Auslass 126 mit einem mittelbar oder unmittelbar mit der Atmosphäre verbundenen Entlüftungsanschluss 122 verbunden.

In einer zweiten Schaltstellung, nachfolgend Druckzufuhrstellung oder Fahrstellung genannt, verbindet das Bistabilventil 116 einen über die Druckluftleitung 118 an seinem Einlass 124 anstehenden Druck unverändert mit dem Auslass 126 bzw. der Druckluftleitung 120. Diese zweite Schaltstellung ist im störungsfreien Fahrbetrieb der Bremsanlage eingestellt. Im störungsfreien Parkzustand des Fahrzeuges wird jedoch die erste Schaltstellung gewählt, so dass die Druckluftleitung 120 entlüftet ist.

Die Stellungen des Bistabilventils 116 werden über eine elektrische Steuereinheit 128 des Feststellbremssteuermoduls 32 geschaltet. Die elektrische Steuereinheit 128 ist zu diesem Zweck über elektrische Leitungen 130 mit dem Bistabilventil 116 elektrisch verbunden. Wird bspw. der Feststellbremssignalgeber 82 betätigt, veranlasst die elektrische Steuereinheit 128 durch Abgabe eines entsprechenden elektrischen Signals das Bistabilventil 116 in seine Parkstellung zu schalten. In entsprechender Weise kann die elektrische Steuereinheit 128 das Bistabilventil. 116 aber auch veranlassen, in seine Fahrstellung zu schalten.

Der Auslass 126 des Bistabilventils 116 ist über die Druckluftleitung 120 mit einem sog. Haltenventil 132 verbunden. Dieses ist als elektromagnetisches Ventil ausgebildet, das wiederum über elektrische Leitungen 134 mit der elektrischen Steuereinheit 128 verbunden ist. Es ist daher über die elektrische Steuereinheit 128 elektromagnetisch betätigbar. Dieses Ventil 132 ist als 2/2-Wegeventil ausgebildet. Es erlaubt in seiner in Fig. 2 dargestellten Schaltstellung ein Durchströmen von Druckluft von der Druckluftleitung 120, die mit einem Einlass 136 des Haltenventils 132 verbunden ist, zu einem Auslass 138 des Haltenventils, der über eine weitere Druckluftleitung 140 mit einem Steuereingang 142 des Relaisventils 114 verbunden ist.

In der zweiten, nicht in Fig. 2 dargestellten Schaltstellung sperrt das Haltenventil 132 die Druckluftströmung ab. Zur Erzielung eines dosierten Durchströmens von Druckluft kann das Ventil 132, z.B. mit einem getakteten Signal über die elektrischen Leitungen 134 von der elektrischen Steuereinheit 128 angesteuert werden. Auf diese Weise kann der Steuereingang 142 des Relaisventils 114 mit einem vorgegebenen Druck beaufschlagt werden.

Das Ventil 132 kann ferner auch als Proportionalventil ausgebildet sein, d.h. es sind durch Ansteuerung des Elektromagneten des Ventils mit geeigneten elektrischen Signalen, z.B. getakteten Signalen, proportionale oder zumindest quasi proportionale Durchlassquerschnitt zwischen den Extremwerten der Durchlassstellung und der Absperrstellung einstellbar.

Das Relaisventil 114 gibt an seinem Auslass 144 einen Ausgangsdruck in eine Druckluftleitung 146 ab, der dem über die Druckluftleitung 140 an den Steuereingang 142 des Relaisventils 114 und somit in eine Steuerkammer des Relaisventils 114 eingesteuerten Druck entspricht, wobei das Relaisventil 114 die hierfür benötigte Druckluft aus der mit einem Einlass 148 des Relaisventils 114 verbundenen Druckluftzufuhrleitung 112 entnimmt. Eine etwaig notwendige Entlüftung der Druckluftleitung 146 erfolgt über einen mittelbar oder unmittelbar mit der Atmosphäre verbundenen Entlüftungsauslass 149 des Relaisventils 114.

Ausgangsseitig des Relaisventils 114 ist an der Druckluftleitung 146 optional ein Drucksensor 150 angeordnet, welcher ein dem Druck in der Druckluftleitung 146 entsprechendes elektrisches Signal an die elektrische Steuereinrichtung 128 abgibt und dort als Istdruckwert ausgewertet wird.

Die Druckluftleitung 146 ist mit der zu den Bremszylindern 24, 26 führenden Druckluftleitung 80 verbunden.

Die Druckluftleitung 146 ist ferner mit einem sog. Anhängerkontrollventil 152 verbunden. Dieses Ventil ist als 3/2-Wegeventil ausgebildet. Mittels dieses Ventils kann eine sog. Anhängerkontrollfunktion aktiviert werden. Als Anhängerkontrollfunktion wird ein Zustand der Bremsanlage 10 bezeichnet, bei dem bei an sich eingelegter Feststellbremsfunktion die Bremsen eines mit dem Zugfahrzeug verbundene Anhängers gelöst werden, um dem Fahrer des Zugfahrzeuges eine Möglichkeit zu geben, zu überprüfen, ob bei abgestelltem Fahrzeugzug die Bremswirkung der Feststellbremse des Zugfahrzeuges alleine ausreicht, um den gesamten Fahrzeugzug am Wegrollen zu hindern. Eine derartige Überprüfung ist insbesondere bei Anhängern erforderlich, bei denen etwa infolge von schleichendem Druckverlust bei längerfristigem Abstellen des Fahrzeuges sich die Bremsen des Anhängers lösen könnten. Auch in diesem Fall muss sichergestellt sein, dass der Fahrzeugzug nicht wegrollt, was demzufolge von der Feststellbremse des Zugfahrzeuges bewirkt werden muss.

Das Anhängerkontrollventil 152 ist zur Betätigung über elektrische Leitung 154 mit der elektrischen Steuereinheit 128 verbunden. In einer ersten, in Fig. 2 dargestellten Schaltstellung verbindet das Anhängerkontrollventil 152 die zu dem Anhängersteuerventil 100 führende Druckleitung 106 mit der Druckluftleitung 146. In seiner zweiten Schaltstellung verbindet das Anhängerkontrollventil 152 die Druckluftleitung 106 mit der Druckluftzufuhrleitung 112 bzw. der Druckluftleitung 92 und damit mit dem Druckluftvorrat des dritten Druckluftvorratsbehälters 90. In dieser zweiten Schaltstellung ist die Anhängerkontrollfunktion aktiviert. Hierbei wird der mit der Druckluftleitung 106 verbundene Drucksteuereingang des Anhängersteuerventils 100 mit Vorratsdruck beaufschlagt; was aufgrund einer invertierenden Funktion des Anhängersteuerventils 100 ein Lösen der Bremsen des Anhängers bewirkt.

Bei herkömmlichen Systemen befindet sich in der Druckluftleitung 92, d.h. außerhalb des Feststellbremsmoduls 32 ein Rückschlagventil, das im Falle eines Abreißens des Anhängers oder einer Leckage im Feststellbremskreis verhindert, dass die Federspeicher der Bremszylinder 24, 26 entlüftet werden. Ein derartiges Entlüften würde nämlich zu einem Einlegen der Feststellbremse führen, was im Falle eines Abreißens des Anhängers zu einer gefährlichen Notbremsung des Zugfahrzeuges führen würde.

Bei dem in Fig. 2 dargestellten Ausführungsbeispiel des Feststellbremssteuermoduls 32 befindet sich hingegen das Rückschlagventil 156 in der Druckluftzufuhrleitung 112, d.h. zwischen dem Anschluss der Druckluftleitung 92 an das Feststellbremsmodul 32 und dem Einlass 148 des Relaisventils 114. Das Relaisventil 114 sperrt, wenn der Druck am Einlass 148 des Relaisventils 114 größer ist als der Druck in der Druckleitung 92. Im entgegengesetzten Fall, d.h. wenn der Druck in der Druckleitung 92 größer ist als am Einlass 148 des Relaisventils 114, öffnet das Rückschlagventil 156, so dass der Druck bzw. Druckluft in diese Richtung ungehindert passieren kann.

Das Relaisventil ist ferner derart angeordnet, dass die Abzweigung in der Druckluftzufuhrleitung 112 zur Druckluftleitung 118 zum Bistabilventil 116 vor dem Rückschlagventil 156 liegt, d.h. zwischen dem Rückschlagventil 156 und dem Anschluss der Druckluftleitung 92 an das Feststellbremsmodul 32. Durch diese Anordnung des Rückschlagventils 156 kann der am Steuereingang 142 des Relaisventils 114 anliegende Steuerdruck bei einem unplanmäßigen Ausfall der elektrischen Energieversorgung über das Haltenventil 132 und das sich in Fahrstellung befindende Bistabilventil 116 über die Druckluftleitungen 140, 120 und 118 sowie über die Druckluftleitung 92 zum dritten Druckluftvorratsbehälter 90 verbunden werden. Durch mehrmaliges Betätigen der Betriebsbremse bei ausgefallener elektrischer Energieversorgung fällt zunächst der Druck in den ersten und zweiten Vorratsbehältern 56, 58 und damit auch im dritten Vorratsbehälter 90 ab, da diese miteinander kommunizieren. Ein Druckabfall im dritten Vorratsbehälter 90 führt jedoch aufgrund der Durchlassstellung der Ventile 116 und 132 und damit der miteinander in Verbindung stehenden Druckluftleitungen 92, 118, 120 und 140 zu einem Druckabfall in der Steuerkammer des Relaisventils 114. Dies führt wiederum zu einem Druckabfall in der Druckleitung 146 und damit auch in der Druckluftleitung 80 und folglich zu einer Entlüftung des Federspeicherteils der Federspeicherbremszylinder. Somit werden die Federspeicher aktiviert, so dass die Feststellbremse eingelegt wird.

Bei einem Ausfall der elektrischen Energieversorgung stirbt der Fahrzeugmotor ab Dies führt dazu, dass ein die Druckluft erzeugender Kompressor keine Druckluft an die Druckluftvorratsbehälter nachfördern kann. Daraus resultiert eine begrenzte Anzahl verbleibender Bremsungen mit der Betriebsbremse. Ferner fällt aufgrund des Ausfalls der elektrischen Energieversorgung auch die elektropneumatische Feststellbremse aus. Dank der Erfindung kann aber das Fahrzeug trotzdem noch sicher in einer Parkstellung abgestellt werden. Der Fahrer braucht hierzu lediglich das Bremspedal 62 mehrfach zu betätigen. Durch den damit verbundenen Druckabfall in den Betriebsbremskreisen und dem Feststellbremskreis können die Federspeicher der Federspeicherbremszylinder langsam eingelegt werden, so dass ein kontrolliertes Abstellen des Fahrzeuges möglich ist.

Vorteilhafterweise ist ferner ein zusätzlicher Drucksensor 158 in die Druckluftzufuhrleitung 112 und zwar zwischen das Rückschlagventil 156 und den Anschluss der Druckluftleitung 92 an das Feststellbremssteuermodul 32 geschaltet. Dieser Drucksensor erzeugt ein dem Druck in der Druckluftzufuhrleitung 112 vor dem Rückschlagventil 156 entsprechendes elektrischen Signal, das über eine elektrische Leitung 160 an die elektrische Steuereinheit 128 abgegeben wird. Wenn im Normalbetrieb der gemessene Druck unter einen kritischen Druck abfällt, wird das Haltenventil 132 bestromt bzw. geschaltet, so dass der Steuerdruck im Steuerraum des Relaisventils 114 eingesperrt wird. Hierdurch kann ein unbeabsichtigten Anlegen der Federspeicherbremsen im Normalbetrieb verhindert werden. Ein Beispiel für einen unplanmäßigen Druckabfall, der von dem Drucksensor 158 gemessen wird, ist bspw. ein Einsatz des Antiblockiersystems, welcher zu einem Druckabfall in den Bremskreisen führt.

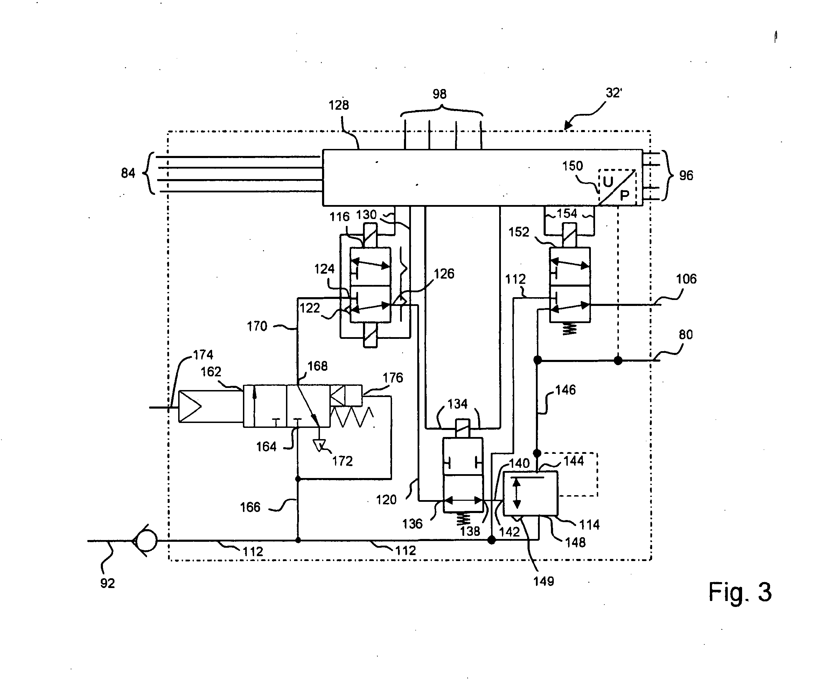

Fig. 3 zeigt ein weiteres Beispiel eines Feststellbremssteuermoduls 32'. Viele Komponenten entsprechen den in Fig. 2 gezeigten Komponenten. Für gleiche Komponenten werden gleiche Bezugsziffern verwendet. Insofern wird zur Vermeidung von Wiederholungen auf die vorstehenden Ausführungen Bezug genommen.

Ein erster Unterschied des Ausführungsbeispiels gemäß Fig. 3 gegenüber dem in Fig. 2 gezeigten Ausführungsbeispiel besteht jedoch darin, dass das in Fig. 2 gezeigte Rückschlagventil 156 in Fig. 3 nicht in dem Feststellbremssteuermodul 32 untergebracht ist, sondern an der herkömmlichen Position, nämlich in der Druckluftleitung 92, die zum Bremssteuermodul 32 führt. Ein weiterer Unterschied besteht darin, dass das Bistabilventil 116 mit seinem Einlass 124 nicht unmittelbar mit der Druckluftzufuhrleitung 112 verbunden ist, sondern unter Zwischenschaltung einer Ventileinrichtung 162. Diese Ventileinrichtung 162 weist einen Einlass 164 auf, der mit der Druckluftzufuhrleitung 112 über eine Druckluftleitung 166 verbunden ist. Die Ventileinrichtung 162 weist ferner einen Auslass 168 auf, der über eine Druckluftleitung 170 mit dem Einlass 124 des Bistabilventils 116 verbunden ist. Ferner weist die Ventileinrichtung 162 einen mittelbar oder unmittelbar mit der Atmosphäre verbundenen Entlüftungsauslass 172 auf.

Die Ventileinrichtung 162 weist ferner einen ersten Eingang 174 auf, der über eine Druckluftleitung mit dem Vorratsdruck der Betriebsbremse, d.h. insbesondere dem ersten und/oder zweiten Druckluftvorratsbehälter 56, 58 verbunden ist. Die Ventileinrichtung weist ferner einen zweiten Eingang 176 auf, der mit der Druckluftleitung 166 verbunden ist. Die Ventileinrichtung 162 ist ferner mittels einer Federkraft beaufschlagt, so dass bei Fehlen von Drücken an den Eingängen 174, 176 die Ventileinrichtung 162 einen vorbestimmten bzw. definierten Zustand bzw. eine vorbestimmte bzw. definierte Schaltstellung einnimmt. Im Normalbetrieb ist eine in Fig. 3 nicht dargestellte erste Schaltstellung vorgesehen, bei welcher der Einlass 164 der Ventileinrichtung 162 mit ihrem Auslass 168 verbunden ist. In dieser Schaltstellung kann der Vorratsdruck der Feststellbremse über das sich in Fahrstellung befindende Bistabilventil 116 und über das durchgeschaltete Haltenventil 132 an den Steuereingang 142 des Relaisventils 114 weitergegeben werden, so dass am Auslass des Relaisventils 144 ein entsprechend hoher Druck anliegt. Dieser Druck öffnet die Federspeicherbremsen bzw. die Feststellbremse, so dass das Fahrzeug ungebremst gefahren werden kann.

Wenn aber die elektrische Energieversorgung des Fahrzeuges ausfällt, soll das Fahrzeug sicher in eine Parkposition mit angelegter Feststellbremse gebracht werden können. Der Fahrer kann nunmehr, ähnlich wie im Ausführungsbeispiel gemäß Fig. 2, durch Betätigen des Bremspedals 62 den Vorratsdruck in dem ersten und/oder zweiten Druckluftvorratsbehälter 56, 58 der Betriebsbremse verbrauchen und damit absenken. Hierdurch fällt auch der Druck am Eingang 174 der Ventileinrichtung 162 ab, so dass die Ventileinrichtung 162 in die in Fig. 3 gezeigte Schaltstellung geschaltet wird, wenn der Druck am Eingang 174 um einen definierten Druckwert unterhalb den Druck, der am Eingang 176 anliegt, abgefallen ist. In dieser Schaltstellung ist der Auslass 168 der Ventileinrichtung 162 mit dem Entlüftungsauslass 172 verbunden, so dass die sich in der Druckluftleitung 170 befindende Druckluft und damit die sich in der Druckluftleitung 120 und der Druckluftleitung 140 befindende Druckluft und somit auch die Steuerkammer des Relaisventils 114 entlüftet wird. Dies führt zu einem Druckabfall am Auslass 144 des Relaisventils 114 und damit auch zu einer Entlüftung des Federspeicherteils der Federspeicherbremszylinder, so dass die Bremszylinder bei Erreichen des Schwellendruckes am Eingang 174 der Ventileinrichtung 162 schlagartig entlüftet werden. Das Fahrzeug kann somit auch bei Ausfall der elektrischen Energieversorgung noch sicher abgestellt werden. Zum Erreichen der vollen Feststellbremskraft muss der Druck in den Betriebsbremskreisen, insbesondere in den Druckluftvorratsbehältern 56, 58, nur bis zum vorgenannten Schwellendruck abgesenkt werden.

In dem in Fig. 3 dargestellten Ausführungsbeispiel werden an den Eingängen 174 und 176 der Betriebsbremsvorratsdruck mit dem Vorratsdruck der Feststellbremse verglichen und wenn der Betriebsbremsdruck unter einem bestimmten Wert fällt, die Druckluftleitung 170 zum Bistabilventil 116 entlüftet, so dass die Federspeicher entlüftet werden, wenn das Bistabilventil sich in seiner Fahrstellung befindet. In einem weiteren, nicht dargestellten Ausführungsbeispiel ist es jedoch ausreichend, dass der Ventileinrichtung lediglich ein Druck, nämlich der Betriebsbremsvorratsbehälter zugeführt wird. Eine Zuführung des Vorratsdruckes des Feststellbremskreises an den Eingang 176 ist demgegenüber nicht zwingend erforderlich, wenngleich vorteilhaft. Es kann vielmehr auch nur über eine vorgespannte Feder in der Ventileinrichtung 162 ein Gegendruck zu dem am Eingang 174 anliegenden Druck erzeugt werden, so dass bei Unterschreiten eines bestimmten Schwellendruckes am Eingang 174 die Ventileinrichtung 162 in die in Fig. 3 dargestellte Stellung geschaltet wird. Auch in diesem Fall ist es möglich durch mehrfaches Betätigen des Bremspedals 62 den Vorratsdruck in den Betriebsbremsvorratsbehältern bis auf einen Schwellenwert abzusenken, bei dem dann die Federspeicher schlagartig entlüftet werden. Daher kann auch bei einer derartigen Ausführung das Fahrzeug auch bei Ausfall der elektrischen Energieversorgung des Fahrzeugs und dem damit verbundenen Ausfall der elektropneumatischen Feststellbremse, einem Absterben des Fahrzeugmotors und der daraus resultierenden begrenzten Anzahl verbleibender Bremsungen mit der Betriebsbremse noch sicher abgestellt werden.

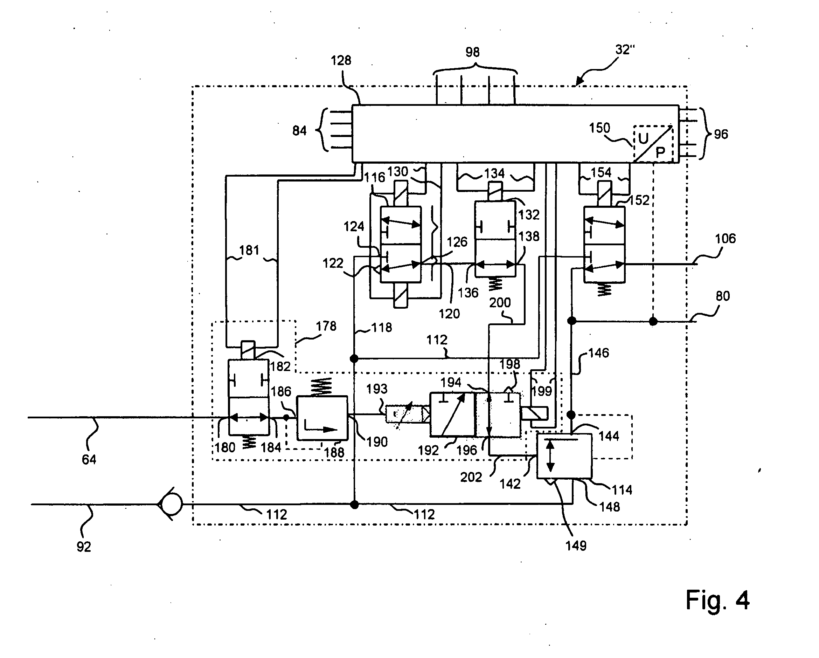

Fig. 4 zeigt ein weiteres Ausführungsbeispiel eines Feststellbremssteuermoduls 32". Das in Fig. 4 gezeigte Ausführungsbeispiel des Feststellbremssteuermoduls 32" entspricht wiederum in vielen Komponenten dem in Fig. 2 bzw. 3 gezeigten Ausführungsbeispiel. Für gleiche Komponenten werden wieder gleiche Bezugsziffern verwendet. Insofern wird zur Vermeidung von Wiederholungen auf die entsprechenden Ausführungen Bezug genommen.

Ein Unterschied besteht jedoch wiederum, wie beim Ausführungsbeispiel gemäß Fig. 3, im Weglassen des Rückschlagventils 156 innerhalb des Feststellbremssteuermoduls 32". Vielmehr ist das entsprechende Rückschlagventil vor dem Anschluss der Luftdruckleitung 92 an das Feststellbremssteuermodul 32" angeordnet.

Ein weiterer Unterschied besteht in einer Ventilanordnung 178, die vor den Steuereingang 142 des Relaisventils 114 geschaltet ist. Sie befindet sich zwischen dem Auslass 138 des Haltenventils 132 und dem Steuereingang 142 des Relaisventils 114. Diese Ventilanordnung 178 wird an ihrem Eingang 180 mit einem von dem Bremsventil 60 abgegebenen Redundanzdruck über die Druckluftleitung 64 beaufschlagt. Eine erste Komponente der Ventilanordnung 178 ist ein über elektrische Leitungen 181 von der Steuereinheit 128 elektrisch betätigbares Magnetventil 182, dessen Einlass den Eingang 180 der Ventilanordnung bildet. Im Normalbetrieb wird dieses Magnetventil bestromt, so dass es in eine in Fig. 4 nicht dargestellte Schaltstellung gebracht wird, bei der der Einlass 180 des Magnetventils 182 mit einem Auslass 184 des Magnetventils nicht in Verbindung steht, sondern abgesperrt ist. In einem unbestromten Zustand ist das Magnetventil 182 jedoch durchgeschaltet, so dass sein Einlass 180 und sein Auslass 184 miteinander verbunden sind.

Der Auslass des Magnetventils 184 ist mit einem Einlass 186 eines Überströmventils 188 verbunden. Dieses Überströmventil 188 ist derart ausgebildet, dass es seinen Einlass 186 zu seinem Auslass 190 durchschaltet, wenn am Einlass 186 ein Druck anliegt, der größer ist als ein vorbestimmter Schwellendruck. Dieser Schwellendruck kann bspw. 80 bis 90% des Druckes betragen, der bei einer Vollbremsung bzw. Vollbetätigung des Bremspedals als Redundanzdruck erzeugt wird.

Der Auslass 190 des Überströmventils 188 ist wiederum mit einem Steuereingang 193 eines weiteren Ventils 192 verbunden. Dieses weitere Ventil 192 weist einen Einlass 194, der mit dem Auslass 138 des Haltenventils 132 verbunden ist, und einen Auslass 196 auf, der mit dem Steuereingang 142 des Relaisventils 114 verbunden ist. Ferner weist dieses Ventil einen mittelbar oder unmittelbar mit der Atmosphäre verbundenen Entlüftungsauslass 198 auf. Das Ventil 192 ist elektromagnetisch schaltbar und daher über elektrische Leitungen 199 mit der elektrischen Steuereinheit 128 verbunden. Im bestromten Zustand, der im Normalbetrieb vorliegt, befindet sich das Ventil 192 in der in Fig. 4 gezeigten Schaltstellung. Wenn im Falle eines Ausfalls der elektrischen Energieversorgung am Eingang 193 des Ventils 192 für eine vorbestimmte Zeitdauer ein Druck anliegt, wechselt das Ventil 192 seine Schaltstellung. Dabei wird der Auslass 196 des Ventils 192 mit dem Entlüftungsauslass 198 verbunden, so dass dadurch auch der Steuereingang 142 des Relaisventils 114 entlüftet wird. Dies führt dann zu einer Entlüftung der Federspeicher und damit zu einem Anlegen der Feststellbremse.

In der in Fig. 4 gezeigten Schaltstellung ist hingegen der Einlass 194 mit dem Auslass 196 des Ventils 192 verbunden, so dass der am Steuereingang 142 des Relaisventils 114 anliegende Druck im normalen Fahrbetrieb von der Druckzufuhrleitung 112 über die Druckluftleitung 118, das Bistabilventil 116, die Druckluftleitung 120, das Haltenventil 132 über eine weitere Druckluftleitung 200, über das Ventil 192 über eine weitere Druckluftleitung 202 an den Steuereingang 142 des Relaisventils 114 zugeführt werden kann.

Mittels der im Zusammenhang mit Fig. 4 beschriebenen Ventilanordnung 178 kann auch bei Ausfall der elektrischen Energieversorgung des Fahrzeugs durch eine längere Vollbetätigung des Bremspedals 62 die Feststellbremse eingelegt werden. Hierzu wird der Redundanzdruck direkt an das Feststellbremssteuermodul angeschlossen. Der Redundanzdruck wird dabei im Normalbetrieb durch das Magnetventil 182 zurückgehalten. Im Falle eines Ausfalls der elektrischen Energieversorgung wird jedoch der Redundanzdruck auf eine pneumatische Logik (Überströmventil 188 und Ventil 192) durchgeschaltet. Diese Logik entlüftet im Fehlerfall den Steuerraum des Relaisventils 114 und somit die Federspeicher, wenn der Redundanzdruck über eine vorbestimmte Zeitdauer einen vorbestimmten Druckwert überschreitet. Damit kann das Fahrzeug auch bei Ausfall der elektrischen Energieversorgung und dem damit verbundenen Ausfall der elektropneumatischen Feststellbremse durch eine längere Vollbetätigung des Betriebsbremspedals sicher abgestellt werden.

Die Erfindung ermöglicht ein endgültiges Entlüften der Federspeicher der Feststellbremse durch Betätigen des Betriebsbremspedals, so dass die Feststellbremse endgültig angelegt wird. Daher kann bei allen beschriebenen Ausführungsbeispielen ein Parkzustand der Feststellbremse und des Fahrzeuges hergestellt werden, so dass der Fahrer das Fahrzeug sicher verlassen kann.

## Patentansprüche

1. Elektropneumatische Bremssteuerungseinrichtung zur Steuerung einer Feststellbremse eines Fahrzeugs mit Betriebsbremse und Feststellbremse, wobei die Betriebsbremse ein Bremspedal (62) und in Wirkverbindung mit dem Bremspedal (62) stehende druckluftbetätigbare Bremszylinder (20, 22, 24, 26) zur Betätigung von Radbremsen aufweist, wobei wenigstens ein Bremszylinder (24, 26) als Federspeicherbremszylinder ausgebildet ist und der Federspeicherteil des Federspeicherbremszylinders die Feststellbremse betätigt, wobei die Bremssteuerungseinrichtung (32) derart ausgebildet ist, dass bei einem Ausfall der elektrischen Energieversorgung der Federspeicherteil des Federspeicherbremszylinders durch Betätigen des Bremspedals (62) dauerhaft entlüftbar ist, **dadurch gekennzeichnet*,* dass** die Bremssteuerungseinrichtung aufweist:
a) eine Druckluftzufuhrleitung (112), die mit einem Druckluftvorratsbehälter (90) zum Betätigen des Federspeicherteils des Federspeicherbremszylinders verbindbar ist,
b) eine luftmengenverstärkende Ventileinrichtung (114), deren Einlass (148) mit der Druckluftzufuhrleitung (112) und deren Auslass (144) mit einer Druckluftleitung (146) zum Federspeicherteil des Federspeicherbremszylinders verbindbar ist und die einen pneumatischen Steuereingang (142) zur Zufuhr eines Steuerdruckes zum Steuern des Druckes am Auslass (144) der luftmengenverstärkenden Ventileinrichtung (114) aufweist,
c) ein elektrisch betätigbares Bistabilventil (116) mit einem Einlass (124), der mit der Druckluftzufuhrleitung (112) und dessen Auslass (126) mit dem Steuereingang (142) der luftmengenverstärkenden Ventileinrichtung (114) verbindbar ist, wobei in einer Parkstellung des Bistabilventils (116) sein Auslass (126) mit einer Entlüftung (122) und in einer Fahrstellung sein Auslass (126) mit seinem Einlass (124) verbunden ist,
d) eine elektrische Steuereinheit (128), mit der das Bistabilventil (116) elektrisch verbunden ist und die das Bistabilventil (116) steuert und
e) ein Rückschlagventil (156), das in der Druckluftzufuhrleitung (112) zwischen den Einlass (148) der luftmengenverstärkenden Ventileinrichtung (114) und einer Abzweigung in der Druckluftzufuhrleitung (112) zum Bistabilventil (116) angeordnet ist, wobei das Rückschlagventil in Richtung von dieser Abzweigung zur luftmengenverstärkenden Ventileinrichtung offen ist, jedoch in entgegen gesetzter Richtung sperrt, und diese Abzweigung direkt mit dem Druckluftvorratsbehälter (90) verbunden ist.

2. Bremssteuerungseinrichtung nach Anspruch 1, **dadurch gekennzeichnet, dass** sie ferner aufweist: ein mit der elektrischen Steuereinheit (128) verbundenes elektrisch betätigbares Haltenventil (132), das zwischen den Steuereingang (142) der luftmengenverstärkenden Ventileinrichtung (114) und den Auslass (126) des Bistabilventils (116) geschaltet ist und bei dem in einem unbestromten Zustand des Haltenventils (132) sein Einlass (136) mit seinem Auslass (138) verbunden und in einem bestromten Zustand sein Einlass (136) vom seinem Auslass (138) abgesperrt ist.

3. Bremssteuerungseinrichtung nach Anspruch 1 oder 2, **gekennzeichnet durch** einen mit der elektrischen Steuereinheit verbundenen Drucksensor (158), der in der Druckluftzufuhrleitung (112) - in Richtung vom Druckmittelvorratsbehälter (90) zur luftmengenverstärkenden Ventileinrichtung (114) betrachtet - vor dem Rückschlagventil (156) angeordnet ist.

4. Bremssteuerungseinrichtung nach Anspruch 3, **dadurch gekennzeichnet, dass** mittels der elektrischen Steuereinheit (128) das Haltenventil (132) derart steuerbar ist, dass bei einem in einem Normalbetrieb auftretenden, vom Drucksensor (158) gemessenen Druckabfall in der Druckzufuhrleitung (112) unter einen vorbestimmten Schwellenwert das Haltenventil (132) bestrombar ist.

5. Elektropneumatische Bremssteuerungseinrichtung zur Steuerung einer Feststellbremse eines Fahrzeugs mit Betriebsbremse und Feststellbremse, wobei die Betriebsbremse ein Bremspedal (62) und in Wirkverbindung mit dem Bremspedal (62) stehende druckluftbetätigbare Bremszylinder (20, 22, 24, 26) zur Betätigung von Radbremsen aufweist, wobei wenigstens ein Bremszylinder (24, 26) als Federspeicherbremszylinder ausgebildet ist und der Federspeicherteil des Federspeicherbremszylinders die Feststellbremse betätigt, wobei die Bremssteuerungseinrichtung (32) derart ausgebildet ist, dass bei einem Ausfall der elektrischen Energieversorgung der Federspeicherteil des Federspeicherbremszylinders durch Betätigen des Bremspedals (62) dauerhaft entlüftbar ist, **dadurch gekennzeichnet, dass** die Bremssteuerungseinrichtung aufweist:
a) eine Druckluftzufuhrleitung (112), die mit einem Druckluftvorratsbehälter (90) zum Betätigen des Federspeicherteils des Federspeicherbremszylinders verbindbar ist,
b) eine luftmengenverstärkende Ventileinrichtung (114), deren Einlass (148) mit der Druckluftzufuhrleitung (112) und deren Auslass (144) mit einer Druckluftleitung (146) zum Federspeicherteil des Federspeicherbremszylinders verbindbar ist und die einen pneumatischen Steuereingang (142) zur Zufuhr eines Steuerdruckes zum Steuern des Druckes am Auslass (144) der luftmengenverstärkenden Ventileinrichtung (114) aufweist,
c) ein elektrisch betätigbares Bistabilventil (116) mit einem Einlass (124), der mit der Druckluftzufuhrleitung (112) und dessen Auslass (126) mit dem Steuereingang (142) der luftmengenverstärkenden Ventileinrichtung (114) verbindbar ist, wobei in einer Parkstellung des Bistabilventils (116) sein Auslass (126) mit einer Entlüftung (122) und in einer Fahrstellung sein Auslass (126) mit seinem Einlass (124) verbunden ist,
d) eine elektrische Steuereinheit (128), mit der das Bistabilventil (116) elektrisch verbunden ist und die das Bistabilventil (116) steuert und
e) eine Ventileinrichtung (162), die zwischen den Einlass (124) des Bistabilventils (116) und die Druckluftzufuhrleitung (112) geschaltet ist und einen Eingang (174) für einen Vorratsdruck der Betriebsbremse sowie einen mit der Druckluftzufuhrleitung (112) verbundenen Einlass (164), einen mit dem Einlass (124) des Bistabilventils (116) verbundenen Auslass (168) und einen Entlüftungsauslass (172) aufweist, wobei diese Ventileinrichtung (162) wenigstens zwei Stellungen aufweist, nämlich eine erste Stellung, die sich bei einem Vorratsdruck der Betriebsbremse größer als ein vorbestimmter Schwellenwert einstellt und bei der der Einlass (164) dieser Ventileinrichtung (162) mit ihrem Auslass (168) verbunden ist, und einer zweiten Stellung, die sich bei einem Vorratsdruck der Betriebsbremse kleiner als ein vorbestimmter Schwellenwert einstellt und bei der der Auslass (168) dieser Ventileinrichtung (162) mit ihrem Entlüftungsauslass (172) verbunden ist.

6. Bremssteuereinrichtung nach Anspruch 5, **dadurch gekennzeichnet, dass** die Ventileinrichtung (162) ferner einen Eingang (176) für den Druck in der Druckluftzufuhrleitung (112) aufweist, wobei der Schwellenwert bestimmt ist durch den Druck in der Druckluftzufuhrleitung (112) zuzüglich eines von einem Federelement ausgeübten Druckes.

7. Elektropneumatische Bremssteuerungseinrichtung zur Steuerung einer Feststellbremse eines Fahrzeugs mit Betriebsbremse und Feststellbremse, wobei die Betriebsbremse ein Bremspedal (62) und in Wirkverbindung mit dem Bremspedal (62) stehende druckluftbetätigbare Bremszylinder (20, 22, 24, 26) zur Betätigung von Radbremsen aufweist, wobei wenigstens ein Bremszylinder (24, 26) als Federspeicherbremszylinder ausgebildet ist und der Federspeicherteil des Federspeicherbremszylinders die Feststellbremse betätigt, wobei die Bremssteuerungseinrichtung (32) derart ausgebildet ist, dass bei einem Ausfall der elektrischen Energieversorgung der Federspeicherteil des Federspeicherbremszylinders durch Betätigen des Bremspedals (62) dauerhaft entlüftbar ist, **dadurch gekennzeichnet, dass** die Bremssteuerungseinrichtung aufweist:
a) eine Druckluftzufuhrleitung (112), die mit einem Druckluftvorratsbehälter (90) zum Betätigen des Federspeicherteils des Federspeicherbremszylinders verbindbar ist,
b) eine luftmengenverstärkende Ventileinrichtung (114), deren Einlass (148) mit der Druckluftzufuhrleftung (112) und deren Auslass (144) mit einer Druckluftleitung (146) zum Federspeicherteil des Federspeicherbremszylinders verbindbar ist und die einen pneumatischen Steuereingang (142) zur Zufuhr eines Steuerdruckes zum Steuern des Druckes am Auslass (144) der luftmengenverstärkenden Ventileinrichtung (114) aufweist,
c) ein elektrisch betätigbares Bistabilventil (116) mit einem Einlass (124), der mit der Druckluftzufuhrleitung (112) und dessen Auslass (126) mit dem Steuereingang (142) der luftmengenverstärkenden Ventileinrichtung (114) verbindbar ist, wobei in einer Parkstellung des Bistabilventils (116) sein Auslass (126) mit einer Entlüftung (122) und in einer Fahrstellung sein Auslass (126) mit seinem Einlass (124) verbunden ist,
d) eine elektrische Steuereinheit (128), mit der das Bistabilventil (116) elektrisch verbunden ist und die das Bistabilventil (116) steuert und
e) eine vor den Steuereingang (142) der luftmengenverstärkenden Ventileinrichtung (114) geschaltete Ventilanordnung (182, 188, 192), mittels derer der am Steuereingang (142) der luftmengenverstärkenden Ventileinrichtung (142) anliegende Druck entlüftet werden kann, wobei diese Ventilanordnung (182, 188, 192) mit einem Redundanzdruck eines als Redundanz vorgesehenen pneumatischen Bremskreises eingangsseitig beaufschlagbar ist, wobei diese Ventilanordnung (182, 188, 192) im Normalbetrieb inaktiv ist, so dass die Druckluftleitung vom Bistabilventil (116) bzw. Haltenventil (132) zur luftmengenverstärkenden Ventileinrichtung (114) offen ist, jedoch im Falle eines Ausfalls der elektrischen Energieversorgung die Ventilanordnung (182, 188, 192) aktiv ist, wobei der Redundanzdruck derart auf die Ventilanordnung (182, 188, 192) einwirkt, dass der Steuereingang (142) der luftmengenverstärkenden Ventileinrichtung (114) dauerhaft entlüftet ist.

8. Bremssteuerungseinrichtung nach Anspruch 7, **dadurch gekennzeichnet, dass** die Ventilanordnung (182, 188, 192) den Steuereingang (142) der luftmengenverstärkenden Ventileinrichtung (114) entlüftet, wenn der Redundanzdruck über eine vorbestimmte Zeitdauer einen vorbestimmten Schwellendruck überschreitet.

9. Bremssteuerungseinrichtung nach Anspruch 7 oder 8, **dadurch gekennzeichnet, dass** die Ventilanordnung ein elektrisch betätigbares Ventil (182) aufweist, bei dem in einem unbestromten Zustand sein Einlass (180) mit seinem Auslass (184) verbunden ist und in einem bestromten Zustand sein Einlass (180) von seinem Auslass (184) abgesperrt ist.

10. Bremssteuerungseinrichtung nach einem der Ansprüche 7 bis 9, **dadurch gekennzeichnet, dass** die Ventilanordnung ein Überströmventil (188) aufweist, das bei Überschreiten des Schwellendruckes öffnet.

11. Bremssteuerungseinrichtung nach einem der Ansprüche 7 bis 10, **dadurch gekennzeichnet, dass** die Ventilanordnung ein Zeitglied aufweist, das in Erwiderung auf ein Drucksignal nach Ablauf einer vorbestimmten Zeitdauer den Zustand eines Ventils (192), das vor den Steuereingang (142) der luftmengenverstärkenden Ventileinrichtung (114) geschaltet ist, von einem ersten Zustand, in dem dieser Steuereingang mit dem Bistabilventil (116) bzw. Haltenventil (138) verbunden ist, in einen zweiten Zustand ändert, in dem dieser Steuereingang (142) mit einer Entlüftung (198) verbunden ist.

12. Elektrisch gesteuerte pneumatische Fahrzeugbremsanlage mit einer Betriebsbremse und einer Feststellbremse, wobei die Betriebsbremse ein Bremspedal (62) und in Wirkverbindung mit dem Bremspedal (62) stehende druckluftbetätigbare Bremszylinder (20, 22, 24, 26) zur Betätigung von Radbremsen aufweist, wobei wenigstens ein Bremszylinder (24, 26) als Federspeicherbremszylinder ausgebildet ist und der Federspeicherteil des Federspeicherbremszylinders die Feststellbremse betätigt, und wobei die Feststellbremse einen Feststellbremssignalgeber (86) zum Betätigen der Feststellbremse durch Entlüften des Federspeicherteils des Federspeicherbremszylinders aufweist, **gekennzeichnet durch** eine elektropneumatische Bremssteuerungseinrichtung nach ei- ' nem der Ansprüche 1 bis 11.

13. Fahrzeug mit einer elektrisch gesteuerten pneumatischen Bremsanlage (10) nach Anspruch 12.

## Claims

1. Electropneumatic brake control device for controlling a parking brake of a vehicle with a service brake and parking brake, wherein the service brake has a brake pedal (62) and brake cylinders (20, 22, 24, 26) which are operatively connected to the brake pedal (62), can be activated by compressed air and have the purpose of activating wheel brakes, wherein at least one brake cylinder (24, 26) is embodied as a spring brake cylinder, and the spring actuator part of the spring brake cylinder activates the parking brake, wherein the brake control device (32) is embodied in such a way that in the event of a failure of the electrical power supply the spring actuator part of the spring brake cylinder can be continuously vented by activating the brake pedal (62), **characterized in that** the brake control device has:
a) a compressed-air supply line (112) which can be connected to a compressed-air reservoir vessel (90) in order to activate the spring actuator part of the spring brake cylinder,
b) an air-quantity-increasing valve device (114) whose inlet (148) can be connected to the compressed-air supply line (112) and whose outlet (144) can be connected by means of a compressed-air line (146) to the spring actuator part of the spring brake cylinder, and which has a pneumatic control inlet (142) for supplying a control pressure for controlling the pressure at the outlet (144) of the air-quantity-increasing valve device (114),
c) a bi-stable valve (116) which can be activated electrically and which has an inlet (124) which can be connected to the compressed-air supply line (112), and whose outlet (126) can be connected to the control inlet (142) of the air-quantity-increasing valve device (114), wherein in a parking position of the bi-stable valve (116) its outlet (126) is connected to a venting means (122), and in a driving position its outlet (126) is connected to its inlet (124),
d) an electric control unit (128) to which the bistable valve (116) is electrically connected and which controls the bi-stable valve (116), and
e) a non-return valve (156) which is arranged in the compressed-air supply line (112) between the inlet (148) of the air-quantity-increasing valve device (114) and a junction in the compressed-air supply line (112) to the bi-stable valve (116), wherein the non-return valve is open in the direction from this junction to the air-quantity-increasing valve device, but is closed in the opposite direction, and this junction is directly connected to the compressed-air reservoir vessel (90).

2. Brake control device according to Claim 1,
**characterized in that** it also has: a holding valve (132), which is connected to the electric control unit (128), can be activated electrically and is connected between the control inlet (142) of the air-quantity-increasing valve device (114) and the outlet (126) of the bi-stable valve (116) and in which, in a de-energized state of the holding valve (132), its inlet (136) is connected to its outlet (138), and in an energized state its inlet (136) is shut off from its outlet (138).

3. Brake control device according to Claim 1 or 2, **characterized by** a pressure sensor (158) which is connected to the electric control unit and is arranged upstream of the non-return valve (156) in the compressed-air supply line (112) when viewed in the direction from the compressed-air reservoir vessel (90) to the air-quantity-increasing valve (114).

4. Brake control device according to Claim 3,
**characterized in that** the holding valve (132) can be controlled by means of the electric control unit (128) in such a way that when there is a drop in pressure, occurring in a normal operating mode and measured by the pressure sensor (158), in the pressure supply line (112) below a predetermined threshold value, the holding valve (132) can be energized.

5. Electropneumatic brake control device for controlling a parking brake of a vehicle with a service brake and a parking brake, wherein the service brake has a brake pedal (62) and brake cylinders (20, 22, 24, 26) which are operatively connected to the brake pedal (62), can be activated by compressed air and have the purpose of activating wheel brakes, wherein at least one brake cylinder (24, 26) is embodied as a spring brake cylinder, and the spring actuator part of the spring brake cylinder activates the parking brake, wherein the brake control device (32) is embodied in such a way that in the event of a failure of the electrical power supply the spring actuator part of the spring brake cylinder can be continuously vented by activating the brake pedal (62), **characterized in that** the brake control device has:
a) a compressed-air supply line (112) which can be connected to a compressed-air reservoir vessel (90) in order to activate the spring actuator part of the spring brake cylinder,
b) an air-quantity-increasing valve device (114) whose inlet (148) can be connected to the compressed-air supply line (112) and whose outlet (144) can be connected via a compressed-air line (146) to the spring actuator part of the spring brake cylinder, and which has a pneumatic control inlet (142) for supplying a control pressure for controlling the pressure at the outlet (144) of the air-quantity-increasing valve device (114),
c) a bi-stable valve (116) which can be activated electrically and which has an inlet (124) which can be connected to the compressed-air supply line (112), and whose outlet (126) can be connected to the control inlet (142) of the air-quantity-increasing valve device (114), wherein in a parking position of the bi-stable valve (116) its outlet (126) is connected to a venting means (122), and in a driving position its outlet (126) is connected to its inlet (124),
d) an electric control unit (128) to which the bistable valve (116) is electrically connected and which controls the bi-stable valve (116), and
e) a valve device (162) which is connected between the inlet (124) of the bi-stable valve (116) and the compressed-air supply line (112), and has an inlet (174) for a supply pressure of the service brake and an inlet (164) which is connected to the compressed-air supply line (112), an outlet (168) which is connected to the inlet (124) of the bistable valve (116), and a venting outlet (172), wherein this valve device (162) has at least two positions, specifically a first position which is set in the event of a supply pressure of the service brake which is higher than a predetermined threshold value and in which the inlet (164) of this valve device (162) is connected to its outlet (168), and a second position which is set in the event of a supply pressure of the service brake which is lower than a predetermined threshold value and in which the outlet (168) of this valve device (162) is connected to its venting outlet (172).

6. Brake control device according to Claim 5,
**characterized in that** the valve device (162) also has an inlet (176) for the pressure in the compressed-air supply line (112), wherein the threshold value is determined by the pressure in the compressed-air supply line (112) plus a pressure applied by a spring element.

7. Electropneumatic brake control device for controlling a parking brake of a vehicle with a service brake and parking brake, wherein the service brake has a brake pedal (62) and brake cylinders (20, 22, 24, 26) which are operatively connected to the brake pedal (62), can be activated by compressed air and have the purpose of activating wheel brakes, wherein at least one brake cylinder (24, 26) is embodied as a spring brake cylinder, and the spring actuator part of the spring brake cylinder activates the parking brake, wherein the brake control device (32) is embodied in such a way that in the event of a failure of the electrical power supply the spring actuator part of the spring brake cylinder can be continuously vented by activating the brake pedal (62), **characterized in that** the brake control device has:
a) a compressed-air supply line (112) which can be connected to a compressed-air reservoir vessel (90) in order to activate the spring actuator part of the spring brake cylinder,
b) an air-quantity-increasing valve device (114) whose inlet (148) can be connected to the compressed-air supply line (112) and whose outlet (144) can be connected via a compressed-air line (146) to the spring actuator part of the spring brake cylinder, and which has a pneumatic control inlet (142) for supplying a control pressure for controlling the pressure at the outlet (144) of the air-quantity-increasing valve device (114),
c) a bi-stable valve (116) which can be activated electrically and which has an inlet (124) which can be connected to the compressed-air supply line (112), and whose outlet (126) can be connected to the control inlet (142) of the air-quantity-increasing valve device (114), wherein in a parking position of the bi-stable valve (116) its outlet (126) is connected to a venting means (122), and in a driving position its outlet (126) is connected to its inlet (124),
d) an electric control unit (128) to which the bistable valve (116) is electrically connected and which controls the bi-stable valve (116), and
e) a valve arrangement (182, 188, 192) which is connected upstream of the control inlet (142) of the air-quantity-increasing valve device (114) and by means of which the pressure which is present at the control inlet (142) of the air-quantity-increasing valve device (114) can be vented, wherein a redundancy pressure of a pneumatic brake circuit which is provided as a redundancy can be applied to the inlet side of this valve arrangement (182, 188, 192), wherein this valve arrangement (182, 188, 192) is inactive in the normal operating mode, with the result that the compressed-air line is open from the bi-stable valve (116) or holding valve (132) to the air-quantity-increasing valve device (114) but in the case of a failure of the electric power supply in the valve arrangement (182, 188, 192) is active, wherein the redundancy pressure acts on the valve arrangement (182, 188, 192) in such a way that the control inlet (142) of the air-quantity-increasing valve device (114) is continuously vented.

8. Brake control device according to Claim 7,
**characterized in that** the valve arrangement (182, 188, 192) vents the control inlet (142) of the air-quantity-increasing valve device (114) if the redundancy pressure exceeds a predetermined threshold pressure over a predetermined time period.

9. Brake control device according to Claim 7 or 8, **characterized in that** the valve arrangement has a valve (182) which can be activated electrically and in which in a de-energized state its inlet (180) is connected to its outlet (184), and in an energized state its inlet (180) is shut off from its outlet (184).

10. Brake control device according to one of Claims 7 to 9, **characterized in that** the valve arrangement has an overflow valve (188) which opens when the threshold pressure is exceeded.

11. Brake control device according to one of Claims 7 to 10, **characterized in that** the valve arrangement has a timer element which, in response to a pressure signal after the expiry of a predetermined time period changes the state of a valve (192), which is connected upstream of the control inlet (142) of the air-quantity-increasing valve device (114), from a first state in which this control inlet is connected to the bi-stable valve (116) or holding valve (138), into a second state in which this control inlet (142) is connected to a venting means (198).

12. Electrically controlled pneumatic vehicle brake system having a service brake and a parking brake, wherein the service brake has a brake pedal (62) and brake cylinders (20, 22, 24, 26) which are operatively connected to the brake pedal (62), can be activated by compressed air and have the purpose of activating wheel brakes, wherein at least one brake cylinder (24, 26) is embodied as a spring brake cylinder, and the spring actuator part of the spring brake cylinder activates the parking brake, and wherein the parking brake has a parking brake signal generator (86) for activating the parking brake by venting the spring actuator part of the spring brake cylinder, **characterized by** an electropneumatic brake control device according to one of Claims 1 to 11.

13. Vehicle having an electrically controlled pneumatic brake system (10) according to Claim 12.

## Revendications

1. Dispositif électropneumatique de commande de frein pour la commande d'un frein d'immobilisation d'un véhicule équipé d'un frein de service et d'un frein d'immobilisation, dans lequel le frein de service comprend une pédale de frein (62) et des cylindres de frein (20, 22, 24, 26) actionnables à l'air comprimé et se trouvant en communication active avec la pédale de frein (62) pour actionner des freins de roue, dans lequel au moins un cylindre de frein (24, 26) est constitué par un cylindre de frein à accumulateur et la partie d'accumulateur du cylindre de frein à accumulateur actionne le frein d'immobilisation, dans lequel le dispositif de commande de frein (32) est réalisé de telle manière que, en cas de panne de l'alimentation en énergie électrique, la partie d'accumulateur du cylindre de frein à accumulateur puisse être durablement purgée de son air en actionnant la pédale de frein (62), **caractérisé en ce que** le dispositif de commande de frein présente :
a) une conduite d'arrivée d'air comprimé (112), qui peut être raccordée à un réservoir d'air comprimé (90) pour actionner la partie d'accumulateur du cylindre de frein à accumulateur,
b) un dispositif de soupape (114) renforçant le débit d'air, dont l'entrée (148) peut être raccordée à la conduite d'arrivée d'air comprimé (112) et dont la sortie (144) peut être raccordée à une conduite d'air comprimé (146) vers la partie d'accumulateur du cylindre de frein à accumulateur et qui présente une entrée de commande pneumatique (142) pour la fourniture d'une pression de commande pour commander la pression à la sortie (144) du dispositif de soupape renforçant le débit d'air (114),
c) une soupape bistable à commande électrique (116) avec une entrée (124), qui peut être raccordée à la conduite d'arrivée d'air comprimé (112) et dont la sortie (126) peut être raccordée à l'entrée de commande (142) du dispositif de soupape renforçant le débit d'air (114), dans lequel, dans une position de parcage de la soupape bistable (116), sa sortie (126) est raccordée à une purge d'air (122) et dans une position de déplacement sa sortie (126) est raccordée à son entrée (124),
d) une unité de commande électrique (128), à laquelle la soupape bistable (116) est reliée électriquement et qui commande la soupape bistable (116), et
e) un clapet anti-retour (156), qui est disposé dans la conduite d'arrivée d'air comprimé (112) entre l'entrée (148) du dispositif de soupape renforçant le débit d'air (114) et un branchement dans la conduite d'arrivée d'air comprimé (112) vers la soupape bistable (116), dans lequel le clapet anti-retour est ouvert dans la direction allant de ce branchement vers le dispositif de soupape renforçant le débit d'air, mais est fermé dans la direction opposée, et ce branchement est raccordé directement au réservoir d'air comprimé (90).

2. Dispositif de commande de frein selon la revendication 1, **caractérisé en ce qu'**il présente en outre: une soupape de retenue (132) à commande électrique reliée à l'unité de commande électrique (128), qui est montée entre l'entrée de commande (142) du dispositif de soupape renforçant le débit d'air (114) et la sortie (126) de la soupape bistable (116) et dans lequel, dans un état non activé de la soupape de retenue (132), son entrée (136) est raccordée à sa sortie (138) et, dans un état activé, son entrée (136) est séparée de sa sortie (138).

3. Dispositif de commande de frein selon la revendication 1 ou 2, **caractérisé par** un capteur de pression (158) relié à l'unité de commande électrique, qui est disposé dans la conduite d'arrivée d'air comprimé (112), avant le clapet anti-retour (156) - considéré dans la direction allant du réservoir d'air comprimé (90) au dispositif de soupape renforçant le débit d'air (114).

4. Dispositif de commande de frein selon la revendication 3, **caractérisé en ce que** la soupape de retenue (132) peut être commandée au moyen de l'unité de commande électrique (128), de telle manière que la soupape de retenue (132) puisse être activée, dans le cas d'une chute de pression en dessous d'une valeur de seuil prédéterminée dans la conduite d'arrivée d'air comprimé (112), mesurée par le capteur de pression (158), se produisant en cours de fonctionnement normal.

5. Dispositif électropneumatique de commande de frein pour la commande d'un frein d'immobilisation d'un véhicule équipé d'un frein de service et d'un frein d'immobilisation, dans lequel le frein de service comprend une pédale de frein (62) et des cylindres de frein (20, 22, 24, 26) actionnables à l'air comprimé et se trouvant en communication active avec la pédale de frein (62) pour actionner des freins de roue, dans lequel au moins un cylindre de frein (24, 26) est constitué par un cylindre de frein à accumulateur et la partie d'accumulateur du cylindre de frein à accumulateur actionne le frein d'immobilisation, dans lequel le dispositif de commande de frein (32) est réalisé de telle manière que, en cas de panne de l'alimentation en énergie électrique, la partie d'accumulateur du cylindre de frein à accumulateur puisse être durablement purgée de son air en actionnant la pédale de frein (62), **caractérisé en ce que** le dispositif de commande de frein présente :
a) une conduite d'arrivée d'air comprimé (112), qui peut être raccordée à un réservoir d'air comprimé (90) pour actionner la partie d'accumulateur du cylindre de frein à accumulateur,
b) un dispositif de soupape (114) renforçant le débit d'air, dont l'entrée (148) peut être raccordée à la conduite d'arrivée d'air comprimé (112) et dont la sortie (144) peut être raccordée à une conduite d'air comprimé (146) vers la partie d'accumulateur du cylindre de frein à accumulateur et qui présente une entrée de commande pneumatique (142) pour la fourniture d'une pression de commande pour commander la pression à la sortie (144) du dispositif de soupape renforçant le débit d'air (114),
c) une soupape bistable à commande électrique (116) avec une entrée (124), qui peut être raccordée à la conduite d'arrivée d'air comprimé (112) et dont la sortie (126) peut être raccordée à l'entrée de commande (142) du dispositif de soupape renforçant le débit d'air (114), dans lequel, dans une position de parcage de la soupape bistable (116), sa sortie (126) est raccordée à une purge d'air (122) et dans une position de déplacement sa sortie (126) est raccordée à son entrée (124),
d) une unité de commande électrique (128), à laquelle la soupape bistable (116) est reliée électriquement et qui commande la soupape bistable (116), et
e) un dispositif de soupape (162), qui est monté entre l'entrée (124) de la soupape bistable (116) et la conduite d'arrivée d'air comprimé (112) et qui présente une entrée (174) pour une pression de réserve du frein de service ainsi qu'une entrée (164) raccordée à la conduite d'arrivée d'air comprimé (112), une sortie (168) raccordée à l'entrée (124) de la soupape bistable (116) et une sortie de purge d'air (172), dans lequel ce dispositif de soupape (162) présente au moins deux positions, à savoir une première position qui s'établit pour une pression de réserve du frein de service supérieure à une valeur de seuil prédéterminée et dans laquelle l'entrée (164) de ce dispositif de soupape (162) est raccordée à sa sortie (168), et une deuxième position qui s'établit pour une pression de réserve du frein de service inférieure à une valeur de seuil prédéterminée et dans laquelle la sortie (168) de ce dispositif de soupape (162) est raccordée à sa sortie de purge d'air (172).

6. Dispositif de commande de frein selon la revendication 5, **caractérisé en ce que** le dispositif de soupape (162) présente en outre une entrée (176) pour la pression dans la conduite d'arrivée d'air comprimé (112), dans lequel la valeur de seuil est déterminée par la pression dans la conduite d'arrivée d'air comprimé (112) augmentée d'une pression exercée par un élément de ressort.

7. Dispositif électropneumatique de commande de frein pour la commande d'un frein d'immobilisation d'un véhicule équipé d'un frein de service et d'un frein d'immobilisation, dans lequel le frein de service comprend une pédale de frein (62) et des cylindres de frein (20, 22, 24, 26) actionnables à l'air comprimé et se trouvant en communication active avec la pédale de frein (62) pour actionner des freins de roue, dans lequel au moins un cylindre de frein (24, 26) est constitué par un cylindre de frein à accumulateur et la partie d'accumulateur du cylindre de frein à accumulateur actionne le frein d'immobilisation, dans lequel le dispositif de commande de frein (32) est réalisé de telle manière que, en cas de panne de l'alimentation en énergie électrique, la partie d'accumulateur du cylindre de frein à accumulateur puisse être durablement purgée de son air en actionnant la pédale de frein (62), **caractérisé en ce que** le dispositif de commande de frein présente :
a) une conduite d'arrivée d'air comprimé (112), qui peut être raccordée à un réservoir d'air comprimé (90) pour actionner la partie d'accumulateur du cylindre de frein à accumulateur,
b) un dispositif de soupape (114) renforçant le débit d'air, dont l'entrée (148) peut être raccordée à la conduite d'arrivée d'air comprimé (112) et dont la sortie (144) peut être raccordée à une conduite d'air comprimé (146) vers la partie d'accumulateur du cylindre de frein à accumulateur et qui présente une entrée de commande pneumatique (142) pour la fourniture d'une pression de commande pour commander la pression à la sortie (144) du dispositif de soupape renforçant le débit d'air (114),
c) une soupape bistable à commande électrique (116) avec une entrée (124), qui peut être raccordée à la conduite d'arrivée d'air comprimé (112) et dont la sortie (126) peut être raccordée à l'entrée de commande (142) du dispositif de soupape renforçant le débit d'air (114), dans lequel, dans une position de parcage de la soupape bistable (116), sa sortie (126) est raccordée à une purge d'air (122) et dans une position de déplacement sa sortie (126) est raccordée à son entrée (124),
d) une unité de commande électrique (128), à laquelle la soupape bistable (116) est reliée électriquement et qui commande la soupape bistable (116), et
e) un dispositif de soupapes (182, 188, 192) monté avant l'entrée de commande (142) du dispositif de soupape renforçant le débit d'air (114), au moyen duquel la pression régnant à l'entrée de commande (142) du dispositif de soupape renforçant le débit d'air (114) peut être purgée, dans lequel ce dispositif de soupapes (182, 188, 192) peut être soumis côté entrée à une pression redondante d'un circuit de freinage pneumatique prévu comme circuit redondant, dans lequel ce dispositif de soupapes (182, 188, 192) est inactif en cours de fonctionnement normal, de telle manière que la conduite d'air comprimé allant de la soupape bistable (116) ou de la soupape de retenue (132) au dispositif de soupape renforçant le débit d'air (114) soit ouverte, mais où il est cependant actif en cas de panne de l'alimentation en énergie électrique du dispositif de soupapes (182, 188, 192), dans lequel la pression redondante agit sur le dispositif de soupapes (182, 188, 192) de telle manière que l'entrée de commande (142) du dispositif de soupape renforçant le débit d'air (114) soit durablement purgée.

8. Dispositif de commande de frein selon la revendication 7, **caractérisé en ce que** le dispositif de soupapes (182, 188, 192) purge l'entrée de commande (142) du dispositif de soupape renforçant le débit d'air (114), lorsque la pression redondante dépasse une pression de seuil prédéterminée pendant une durée prédéterminée.

9. Dispositif de commande de frein selon la revendication 7 ou 8, **caractérisé en ce que** le dispositif de soupapes comprend une soupape à commande électrique (182), dans laquelle, dans un état non inactivé, son entrée (180) est raccordée à sa sortie (184) et, dans un état activé, son entrée (180) est séparée de sa sortie (184).

10. Dispositif de commande selon l'une quelconque des revendications 7 à 9, **caractérisé en ce que** le dispositif de soupapes comprend une soupape de débordement (188), qui s'ouvre en cas de dépassement de la pression de seuil.

11. Dispositif de commande de frein selon l'une quelconque des revendications 7 à 10, **caractérisé en ce que** le dispositif de soupapes comprend un système temporisé qui, en réponse à un signal de pression et après expiration d'une durée prédéterminée, change l'état d'une soupape (192), qui est montée avant l'entrée de commande (142) du dispositif de soupape renforçant le débit d'air (114), d'un premier état, dans lequel cette entrée de commande est raccordée à la soupape bistable (116) ou à la soupape de retenue (138), en un deuxième état dans lequel cette entrée de commande (142) est raccordée à une purge d'air (198).

12. Installation pneumatique de frein de véhicule à commande électrique, comportant un frein de service et un frein d'immobilisation, dans laquelle le frein de service comprend une pédale de frein (62) et des cylindres de frein (20, 22, 24, 26) actionnables à l'air comprimé et se trouvant en communication avec la pédale de frein (62) pour actionner des freins de roue, dans laquelle au moins un cylindre de frein (24, 26) est constitué par un cylindre de frein à accumulateur (86) pour actionner le frein de service par purge d'air de la partie d'accumulateur du cylindre de frein à accumulateur, **caractérisée par** un dispositif électropneumatique de commande de frein selon l'une quelconque des revendications 1 à 11.

13. Véhicule équipé d'une installation pneumatique de frein à commande électrique (10) selon la revendication 12.
